(19) **Europäisches Patentamt / European Patent Office / Office européen des brevets**

(11) **EP 4 712 659 A1**

(12) # EUROPEAN PATENT APPLICATION
published in accordance with Art. 153(4) EPC

(43) Date of publication:
**18.03.2026 Bulletin 2026/12**

(21) Application number: **24807406.4**

(22) Date of filing: **30.04.2024**

(51) International Patent Classification (IPC):
*H04W 72/30* (2023.01)   *H04W 72/0446* (2023.01)
*H04W 72/0453* (2023.01)   *H04W 72/1273* (2023.01)
*H04W 72/566* (2023.01)   *H04W 72/23* (2023.01)
*H04W 4/06* (2009.01)   *H04L 1/1812* (2023.01)
*H04L 5/00* (2006.01)

(52) Cooperative Patent Classification (CPC):
**H04L 1/1812; H04L 5/00; H04W 4/06;
H04W 72/0446; H04W 72/0453; H04W 72/1273;
H04W 72/23; H04W 72/30; H04W 72/566**

(86) International application number:
**PCT/KR2024/005875**

(87) International publication number:
**WO 2024/237529 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.05.2023   KR 20230062055
09.08.2023   KR 20230104452
24.08.2023   US 202363534573 P
27.09.2023   KR 20230131245
27.09.2023   US 202363540682 P
02.11.2023   KR 20230150129**

(71) Applicant: **LG Electronics Inc.
Yeongdeungpo-gu
Seoul 07336 (KR)**

(72) Inventors:
• **AHN, Seungjin**
  Seoul 06772 (KR)
• **LEE, Youngdae**
  Seoul 06772 (KR)
• **KIM, Jaehyung**
  Seoul 06772 (KR)
• **YANG, Suckchel**
  Seoul 06772 (KR)
• **KIM, Seonwook**
  Seoul 06772 (KR)

(74) Representative: **Plasseraud IP
104 Rue de Richelieu
CS92104
75080 Paris Cedex 02 (FR)**

(54) **METHOD AND APPARATUS FOR PERFORMING DOWNLINK TRANSMISSION AND RECEPTION IN WIRELESS COMMUNICATION SYSTEM**

(57)    Disclosed are a method and an apparatus for communicating in a wireless communication system. A method performed by a terminal, according to one embodiment of the present disclosure, comprises the steps of: receiving a first downlink channel and a second downlink channel, in a first slot, from a base station; and decoding the first downlink channel and the second downlink channel, on the basis of the number of physical resource blocks (PRB s), which are allocated to each of the first downlink channel and the second downlink channel, being less than or equal to a first threshold value, wherein the first downlink channel and the second downlink channel may partially or totally overlap in a time domain.

EP 4 712 659 A1

## FIG.7

RECEIVING THE FIRST DOWNLINK CHANNEL
AND THE SECOND DOWNLINK CHANNEL
FROM THE BASE STATION IN THE FIRST
SLOT ~ S710

BASED ON THE NUMBER OF PRBS
ALLOCATED FOR EACH OF THE FIRST
DOWNLINK CHANNEL AND THE SECOND
DOWNLINK CHANNEL BEING LESS THAN OR ~ S720
EQUAL TO A FIRST THRESHOLD VALUE,
DECODING THE FIRST DOWNLINK CHANNEL
AND THE SECOND DOWNLINK CHANNEL

**Description**

[Technical Field]

The present disclosure relates to a wireless communication system, and more particularly, to a method and device for performing downlink transmission and reception in a narrowband in a wireless communication system.

[Background]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

The technical problem of the present disclosure is to provide a method and device for performing downlink transmission and reception in a wireless communication system.

The technical problem of the present disclosure is to provide a method and device for transmitting and receiving at least one unicast/multicast downlink in a narrowband.

The technical problem of the present disclosure is to provide a method and device for processing multiple unicast/multicast downlinks received simultaneously in a narrowband.

The technical objects to be achieved by the present disclosure are not limited to the above-described technical objects, and other technical objects which are not described herein will be clearly understood by those skilled in the pertinent art from the following description.

[Technical Solution]

According to one embodiment of the present disclosure, a method performed by a user equipment (UE) in a wireless communication system may include receiving a first downlink channel and a second downlink channel from a base station in a first slot; and based on a number of physical resource blocks (PRBs) allocated for each of the first downlink channel and the second downlink channel being less than or equal to a first threshold value, decoding the first downlink channel and the second downlink channel, and the first downlink channel and the second downlink channel partially or fully may overlap in a time domain.

According to one embodiment of the present disclosure, a method performed by a user equipment (UE) in a wireless communication system may include receiving a first downlink channel from a base station in slot n (where n is an integer greater than or equal to 0); and based on a number of physical resource blocks (PRBs) allocated to the first downlink channel being less than or equal to a second threshold, processing reception of the first downlink channel, and based on the number of PRBs allocated to the first downlink channel exceeding the second threshold, and the first downlink channel reception being a repetitive reception or the second downlink channel being received in slot n+1, the reception of the first downlink channel may be not processed by the UE.

According to one embodiment of the present disclosure, a method performed by a base station in a wireless communication system may include transmitting information for scheduling a first downlink channel and a second downlink channel to a user equipment (UE) in a first slot; and transmitting the first downlink channel and the second downlink channel to the UE in the first slot, and based on a number of physical resource blocks (PRBs) allocated to each of the first downlink channel and the second downlink channel being less than or equal to a first threshold, the first downlink channel and the second downlink channel may be decoded by the UE, and the first downlink channel and the second downlink channel partially or fully may overlap in a time domain.

[Technical Effects]

According to various embodiments of the present disclosure, a method and apparatus for performing downlink transmission and reception in a wireless communication system may be provided.

According to various embodiments of the present disclosure, a method and apparatus for transmitting and receiving at least one unicast/multicast downlink in a narrowband may be provided.

According to various embodiments of the present disclosure, a method and apparatus for processing multiple unicast/multicast downlinks simultaneously received in a narrowband may be provided.

According to various embodiments of the present disclosure, an enhanced reduced capability (eRedCap) UE can more efficiently process downlinks scheduled in a unit slot.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.

FIG. 2 illustrates a frame structure in a wireless communication system to which the present disclosure may be applied.

FIG. 3 illustrates a resource grid in a wireless communication system to which the present disclosure may be applied.

FIG. 4 illustrates a physical resource block in a wireless communication system to which the present disclosure may be applied.

FIG. 5 illustrates a slot structure in a wireless communication system to which the present disclosure may be applied.

FIG. 6 illustrates physical channels used in a wireless communication system to which the present disclosure may be applied and a general signal transmission and reception method using them.

FIG. 7 is a diagram illustrating a process by which a UE performs communication according to an embodiment of the present disclosure.

FIG. 8 is a diagram illustrating a process by which a base station performs communication according to an embodiment of the present disclosure.

FIG. 9 is a diagram illustrating a case in which multiple channels overlap in the time domain according to an embodiment of the present disclosure.

FIG. 10 is a diagram illustrating a case in which multiple channels do not overlap in the time domain according to an embodiment of the present disclosure.

FIG. 11 is a diagram illustrating a case in which an MBS PDSCH is repeatedly allocated beyond a 5 MHz bandwidth according to an embodiment of the present disclosure.

FIG. 12 is a diagram illustrating a case in which one or more channels are scheduled in a single slot according to an embodiment of the present disclosure.

FIG. 13 is a diagram illustrating a case where one or more channels are scheduled in a single slot according to an embodiment of the present disclosure.

FIG. 14 is a diagram illustrating a case where multiple channels are scheduled in a single slot according to an embodiment of the present disclosure.

FIG. 15 is a diagram illustrating a case where PRBs exceeding the number of PRBs corresponding to a 5 MHz bandwidth are scheduled in a single slot according to an embodiment of the present disclosure.

FIG. 16 illustrates a block diagram of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

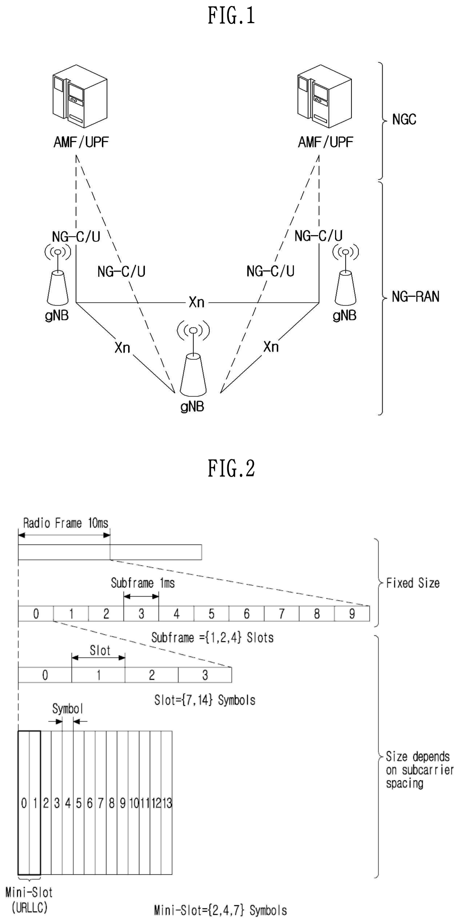

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f = 2^\mu \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c = 1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f = 1/(\Delta f_{max} N_f/100) \cdot T_c = 10ms$. Here, a radio frame is configured with 10 subframes having a duration of $T_{sf} = (\Delta f_{max} N_f/1000) \cdot T_c = 1ms$, respectively. In this case, there may be one set of frames for an uplink and one set of frames for a downlink. In addition, transmission in an uplink frame No. i from a terminal should start earlier by $T_{TA} = (N_{TA} + N_{TA,offset})T_c$ than a corresponding downlink frame in a corresponding terminal starts. For a subcarrier spacing configuration $\mu$, slots are numbered in an increasing order of $n_s^\mu \in \{0,..., N_{slot}^{subframe,\mu} - 1\}$ in a subframe and are numbered in an increasing order of $n_{s,f}^\mu \in \{0,..., N_{slot}^{frame,\mu} - 1\}$ in a radio frame. One slot is configured with $N_{symb}^{slot}$ consecutive OFDM symbols and $N_{symb}^{slot}$ is determined according to CP. A start of a slot $n_s^\mu$ in a subframe is temporally arranged with a start of an OFDM symbol $n_s^\mu N_{symb}^{slot}$ in the same subframe. All terminals may not perform transmission and reception at the same time, which means that all OFDM symbols of a downlink slot or an uplink slot may not be used. Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

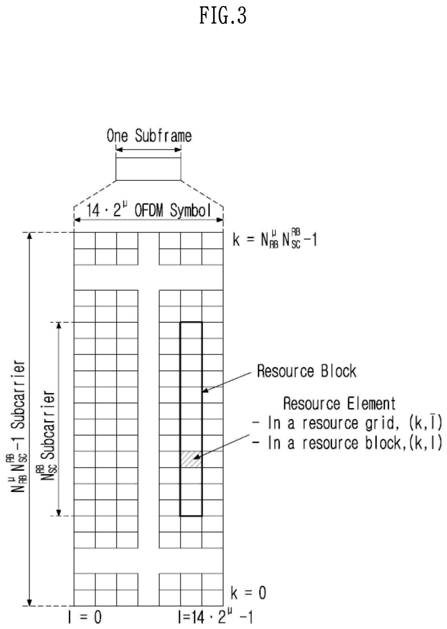

FIG. 2 is an example on $\mu$=2 (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered. Hereinafter, the physical resources which may be considered in an NR system will be described in detail. First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing. FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu}<N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l'). Here, $k=0,...,N_{RB}^{\mu}N_{sc}^{RB}-1$ is an index in a frequency domain and $l'=0,...,2^{\mu}N_{symb}^{(\mu)}-1$ refers to a position of a symbol in a subframe. When referring to a resource element in a slot, an index pair (k,l) is used.

Here, $l=0,...,N_{symb}^{\mu}-1$. A resource element (k,l') for $\mu$ and an antenna port p corresponds to a complex value, $a_{k,l}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

-    offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

-    absoluteFrequencyPointA represents a frequency-position of point A expressed as in ARFCN (absolute radiofrequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n^{\mu}_{CRB} = \left\lfloor \frac{k}{N^{RB}_{sc}} \right\rfloor$$

In Equation 1, k is defined relatively to point A so that k=0 corresponds to a subcarrier centering in point A. Physical resource blocks are numbered from 0 to $N_{BWP,i}^{size,\mu}$-1 in a bandwidth part (BWP) and i is a number of a BWP. A relationship between a physical resource block $n_{PRB}$ and a common resource block $n_{CRB}$ in BWP i is given by the following Equation 2.

【Equation 2】

$$n^{\mu}_{CRB} = n^{\mu}_{PRB} + N^{start,\mu}_{BWP,i}$$

$N_{BWP,i}^{start,\mu}$ is a common resource block that a BWP starts relatively to common resource block 0.

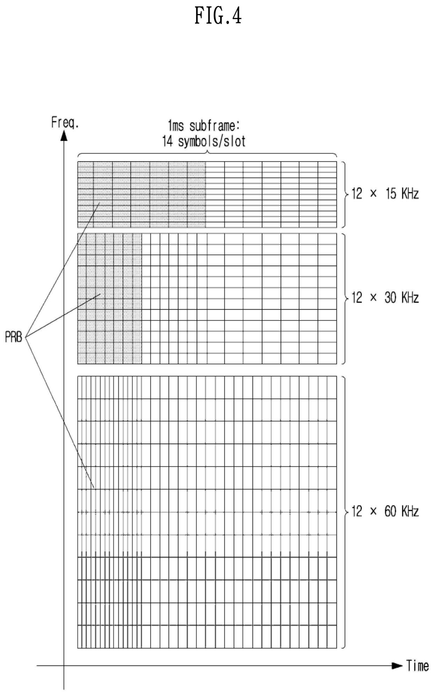

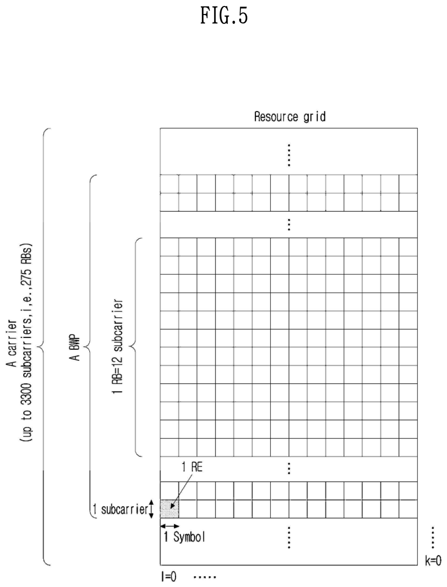

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.).

Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

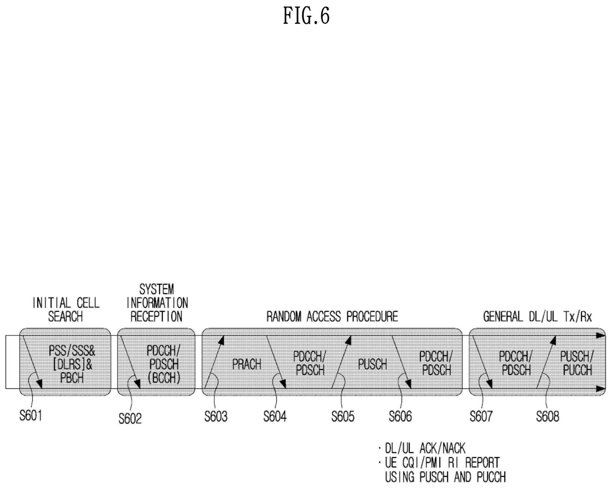

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined. DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted. DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Downlink transmission and reception method of (e)RedCap UE

As described above, services that consider eMBB, URLLC, and the massive Internet of Things (mIoT) are being provided on wireless communication systems (e.g., NR, etc.). For example, hybrid services that consider eMBB, URLLC, and mIoT may be provided on wireless communication systems. Here, mIoT requires optimization of power consumption rather than high performance (e.g., high transmission speed, etc.) such as carrier aggregation.

With the recent widespread use of smart factories and/or wearable devices, the need for new UE types that take low power and URLLC into account is increasing. Accordingly, reduced capability (RedCap) UEs (i.e., R17 RedCap UEs) were introduced in 3GPP NR Release 17. RedCap UEs can perform communications using frequency resources on a narrow spectrum or narrow bandwidth. For example, RedCap UEs can reduce power consumption and cost by utilizing up to 20 MHz or 5 MHz of bandwidth instead of the existing 100 MHz bandwidth.

After that, eRedCap UEs were introduced in 3GPP NR Release 18. eRedCap UEs are similar to RedCap UEs in that they operate in a 20 MHz bandwidth. However, in the case of eRedCap UEs, unicast PDSCH and/or PUSCH (i.e., C-RNTI-based PDSCH and/or PUSCH) can be allocated within a bandwidth of up to 5 MHz. That is, a PRB of a unicast PUSCH/PDSCH corresponding to a bandwidth of up to 5 MHz can be allocated to an eRedCap UE. In this case, the unicast PUSCH/PDSCH can be indicated/allocated to the eRedCap UE through the FDRA (frequency domain resource assignment) field of the DCI, etc.

Additionally, for eRedCap UEs, various RNTI-based channels related to paging, system information block (SIB), RACH, etc. can be allocated within a 20 MHz bandwidth. That is, PRBs of various RNTI-based channels corresponding to a maximum bandwidth of 20 MHz can be allocated to eRedCap UEs (same as RedCap UEs).

An eRedCap UE may process data (e.g., PRB) corresponding to a bandwidth of up to 5 MHz within a unit slot. If a channel exceeding 5 MHz of bandwidth is scheduled/allocated, the eRedCap UE may require additional processing time margin. In the case of a unicast channel, scheduling may be performed for each slot, and thus, PRBs corresponding to the maximum bandwidth (e.g., 5 MHz) may be allocated to the eRedCap UE (e.g., 25 PRBs when the SCS is 15 kHz or 12 PRBs when the SCS is 30 kHz).

Additionally, for RedCap UEs (i.e., R17 RedCap UEs introduced in 3GPP Release 17), unicast channels can be scheduled on a bandwidth of up to 20 MHz, and the maximum data rate (date rate) can be 500 Mbps. For eRedCap UEs (i.e., RedCap UEs introduced in 3GPP Release 18), unicast channels can be scheduled on a bandwidth of up to 20 MHz or a bandwidth of 5 MHz, and the maximum data rate (date rate) can be 10 Mbps. Various embodiments of the present disclosure can be applied to eRedCap UEs in which unicast channels can be scheduled on a bandwidth of up to 5 MHz. However, this is only one embodiment, and various embodiments of the present disclosure can also be applied to R17 RedCap terminals or eRedCap UEs in which unicast channels can be scheduled on a bandwidth of 20 MHz.

The present disclosure relates to a method for efficiently receiving a downlink (DL) channel (e.g., a group common channel, etc.) related to a multicast broadcasting service (MBS) by the above-described (e)RedCap UE (i.e., a UE using a BWP of up to 20 MHz). Here, the MBS-related DL channel may include a DL channel (e.g., a PDSCH, etc.) scheduled by a DCI scrambled with a CRC by an MCCH (MBS control channel)-RNTI, a G(group)-RNTI, or a G(group)-CS-RNTI. In describing the present disclosure, the MBS channel may collectively refer to an MBS-related (DL/UL) channel.

Unlike unicast channels, MBS-related channels may be transmitted to multiple terminals simultaneously. When an eRedCap UE receives an MBS-related channel within a 5 MHz bandwidth range, it may not be efficient from the perspective of other types of UEs (e.g., R17 RedCap UEs) that also receive the MBS-related channel. When an eRedCap UE m ay receive/use the same 20 MHz bandwidth as other common channels, the possibility of sharing the channel with other types of UEs increases, and thus efficiency may be improved from a network operation perspective.

An MBS channel may have both the SIB broadcast and unicast properties of a common channel. Therefore, in describing the present disclosure, the MBS channel will be described by dividing it into a broadcast/broadcasting channel and a multicast/multicast channel (by bandwidth). That is, when an MBS channel is transmitted to an eRedCap UE, a restriction may be applied to the bandwidth over which the MBS channel is transmitted. If the bandwidth over which the MBS channel is transmitted is not restricted, additional margin may be applied to the processing time of the MBS channel.

In describing the present disclosure, the fact that an eRedCap terminal drops a specific channel may mean that the specific channel is not skipped or that the specific channel is not expected/required to be decoded. Furthermore, for an eRedCap UE, the fact that PRBs with a bandwidth of up to 20 MHz may be allocated/scheduled may mean that PRBs exceeding a specific bandwidth (e.g., 5 MHz) may be allocated/scheduled.

As an example of the present disclosure, if the MBS channel is a broadcast channel, the eRedCap UE may be allocated/scheduled for the MBS channel within a bandwidth of up to 20 MHz, similarly to the SIB. Here, the broadcast channel can be scheduled by a DCI that is CRC scrambled by an MCCH-RNTI or a G-RNTI. Since the eRedCap UE may receive the SIB within a bandwidth of up to 20 MHz, the eRedCap UE may also be allocated/scheduled for the broadcast channel to which the HARQ process (i.e., the ACK/NACK response transmission/reception process, etc.) is not applied, within a bandwidth of up to 20 MHz.

In another example of the present disclosure, when the MBS channel is a multicast channel, the multicast channel may be scheduled by DCI (e.g., DCI format 4_1 or 4_2) CRC-scrambled by G-RNTI or G-CS-RNTI. In the case of a multicast channel, it may also be scheduled/allocated within a bandwidth of up to 20 MHz like a broadcast channel. However, when a HARQ process for a multicast channel is applied (i.e., when an ACK/NACK response transmission/reception process is applied), an additional processing time (e.g., x ms or a value in symbol length unit of OFDM) can be applied to the processing times predefined in Table 6 (PDSCH processing time for PDSCH processing capability 1) and Table 7 (PDSCH processing time for PDSCH processing capability 2).

[Table 6]

| μ | PDSCH decoding time $N_l$ [symbols] | |
| --- | --- | --- |
| | dmrs-AdditionalPosition = 'pos0' in *DMRS-DownlinkConfig* in *dmrs-DownlinkForPDSCH-MappingTypeA* and *dmrs-DownlinkForPDSCH-MappingTypeB* if either higher layer parameter is configured, and in *dmrs-DownlinkForPDSCH-MappingTypeA-DCI-1-2* and *dmrs-DownlinkForPDSCH-MappingTypeB-DCI-1-2* if either higher layer parameter is configured | dmrs-AdditionalPosition ≠ 'pos0' in *DMRS-DownlinkConfig* in any of *dmrs-DownlinkForPDSCH-MappingTypeA*, *dmrs-DownlinkForPDSCH-MappingTypeB*, *dmrs-DownlinkForPDSCH-MappingTypeA-DCI-1-2*, *dmrs-DownlinkForPDSCH-MappingTypeB-DCI-1-2*, or if none of the higher layer parameters is configured |
| 0 | 8 | $N_{1,0}$ |
| 1 | 10 | 13 |
| 2 | 17 | 20 |
| 3 | 20 | 24 |
| 5 | 80 | 96 |
| 6 | 160 | 192 |

[Table 7]

| μ | PDSCH decoding time $N_l$ [symbols] |
| --- | --- |
| | dmrs-AdditionalPosition = 'pos0' in *DMRS-DownlinkConfig* in *dmrs-DownlinkForPDSCH-MappingTypeA* and *dmrs-DownlinkForPDSCH-MappingTypeB* if either higher layer parameter is configured, and in *dmrs-DownlinkForPDSCH-MappingTypeA-DCI-1-2* and *dmrs-DownlinkForPDSCH-MappingTypeB-DCI-1-2* if either higher layer parameter is configured |
| 0 | 3 |
| 1 | 4.5 |
| 2 | 9 for frequency range 1 |

Additionally, if ACK/NACK information transmission is not configured for MBS-based multicast channels, it may be possible for 20 MHz to be used optionally.

Additionally, in the above-described methods, a method for configuring a HARQ feedback mode for multicasting may exist. For example, RRC signaling for configuring an MBS-based HARQ mode may be transmitted to an eRedCap UE, and the RRC signaling may include information disclosed in Table 8 below.

【Table 8】

```
MBS-RNTI-SpecificConfig-r17 ::=  SEQUENCE {

mbs-RNTI-SpecificConfigId-r17  MBS-RNTI-SpecificConfigId-r17,

groupCommon-RNTI-r17                        CHOICE {

        g-RNTI                              RNTI-Value,

        g-CS-RNTI                           RNTI-Value

    },

drx-ConfigPTM-r17           SetupRelease { DRX-ConfigPTM-r17 }                    OPTIONAL,
    -- Need  M

harq-FeedbackEnablerMulticast-r17 ENUMERATED {dci-enabler, enabled}              OPTION
AL,    -- Need  S

harq-FeedbackOptionMulticast-r17    ENUMERATED {ack-nack, nack-only}             OPTI
ONAL,    -- Cond  HARQFeedback

pdsch-AggregationFactor-r17            ENUMERATED {n2, n4, n8}
OPTIONAL      -- Cond  G-RNTI }
```

As an example of the present disclosure, an enabler of HARQ may be indicated/configured via DCI or/and RRC signaling. When the enabler of HARQ is indicated via DCI, an ACK/NACK mode or a NACK-only mode may be indicated. As another example, an operation/mode related to HARQ-ACK feedback may be indicated via a HARQ-ACK feedback indication enabling/disabling field included in DCI format 4_1. The HARQ-ACK feedback indication enabling/disabling field may be set to 1 bit when "harq-FeedbackOptionMulticast" indicates "dci-enabler". When the HARQ-ACK Feedback Indication Enable/Disable field value is set to 1, the enabling of HARQ-ACK feedback is indicated, and when the HARQ-ACK Feedback Indication Enable/Disable field value is set to 0, the disabling of HARQ-ACK feedback may be indicated. When the RRC signaling "Harq-FeedbackEnable rMulticast-r17" is not transmitted, HARQ feedback may always be disabled. "Harq-FeedbackEnablerMulticast" may indicate whether the UE should provide HARQ feedback for MBS multicast. The "dci-enabler" value configured by "Harq-FeedbackEnablerMulticast" may mean whether the terminal should provide HARQ feedback for MBS multicast. The present disclosure will explain a case where HARQ-related operations are controlled via RRC or DCI when HARQ feedback is disabled.

Additionally, the present disclosure may be applied to a terminal that is not capable of processing the entire bandwidth of RF, but has a number of PRBs that can be processed in the BB baseband limited to the number of PRBs corresponding to a 5 MHz bandwidth.

Furthermore, the present disclosure can be applied to both UEs that simultaneously process two channels when two channels are scheduled in a single slot, or to UEs that cannot process either channel. Processing either channel may be more service-oriented than not processing both channels. Accordingly, the present disclosure describes a method for prioritizing and simultaneously receiving two channels.

As an example of the present disclosure, an eRedCap UE may not expect simultaneous scheduling of multiple channels in the same slot. Simultaneous scheduling/reception of multiple channels may include cases where the multiple channels overlap or do not overlap on an OFDM symbol. Furthermore, a PDSCH scheduled by an SI-RNTI may be based on the acquisition of a P-RNTI-triggered SI.

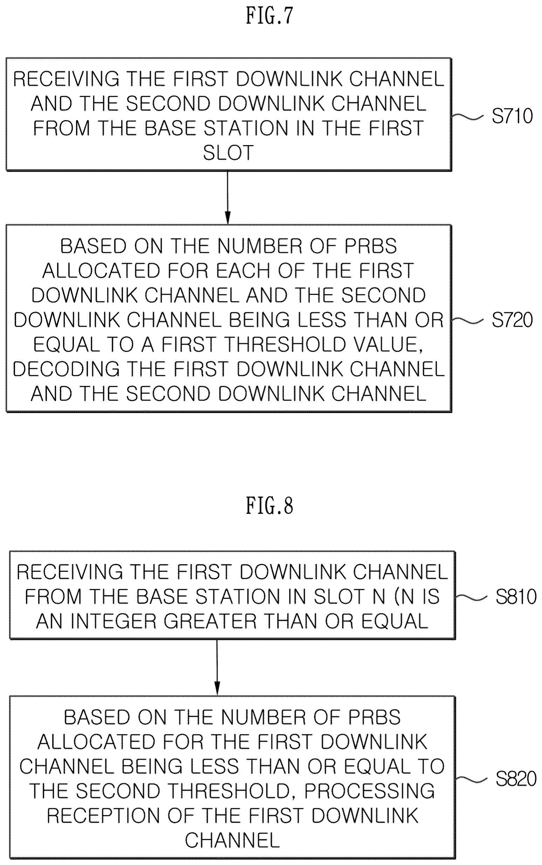

FIG. 7 is a diagram illustrating a process of a terminal performing communication according to an embodiment of the present disclosure. The terminals of FIGS. 7 and 8 may be, but are not limited to, enhanced reduced capability (eRedCap) UEs (i.e., UEs that support R18 redCap UEs). The UEs of FIG. 7 may include RedCap UEs or general UEs.

The UE may receive the first downlink channel and the second downlink channel from the base station in the first slot (S710).

Prior to step S710, the UE may transmit capability information to the base station indicating that it supports reception of a first downlink channel and a second downlink channel that are frequency division multiplexed (FDMed) in a single slot.

Accordingly, the base station may identify that the UE can receive the first downlink channel and the second downlink channel, which are FDMed in a single slot. The base station may transmit information for scheduling the first downlink channel and the second downlink channel to the UE in the first slot. In addition, the base station may transmit the first downlink channel and the second downlink channel to the UE in the first slot.

As an example of the present disclosure, the first downlink channel may be a unicast physical downlink shared channel (PDSCH), and the second downlink channel may be a multicast PDSCH or a broadcast PDSCH.

And, the first downlink channel may be scheduled by first downlink control information (DCI) CRC-scrambled by C(cell)-RNTI or CS(configured scheduling)-RNTI, and the second downlink channel may be scheduled by second DCI CRC-scrambled by G(group)-RNTI or MCCH(MBS control channel)-RNTI.

That is, information for scheduling the first downlink channel transmitted by the base station may be the first DCI, and information for scheduling the second downlink channel may be the second DCI. However, this is only an example, and (repeated) transmission of the first downlink channel and/or the second downlink channel may be configured/indicated by MAC CE or RRC signaling.

Here, the first downlink channel and the second downlink channel may partially or fully overlap in the time domain. And, the PRBs allocated to each of the first downlink and the second downlink may not overlap each other (in the frequency domain).

Based on the number of PRBs allocated for each of the first downlink channel and the second downlink channel being less than or equal to a first threshold value, the UE may decode the first downlink channel and the second downlink channel (S720).

For example, based on the subcarrier spacing (SCS) being set to 15 kHz, the first threshold may be 25, and based on the SCS being set to 30 kHz, the first threshold may be 12.

For example, based on the number of PRBs allocated for each of the first downlink channel and the second downlink channel exceeding a first threshold, the UE may skip decoding of one of the first downlink channel and the second downlink channel.

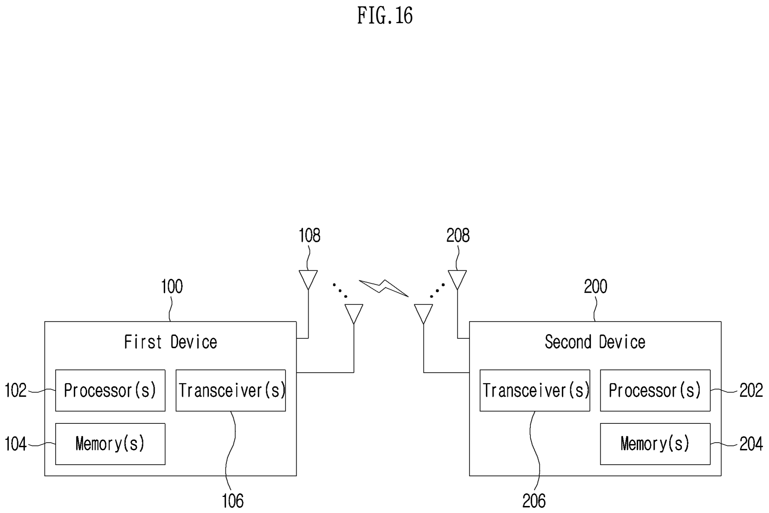

The method described in the example of FIG. 7 can be performed by the first device (100) and the second device (200) of FIG. 16. That is, the UE can be implemented as the first device (100) of FIG. 16, and the base station can be implemented as the second device (200). For example, one or more processors (102) of the first device (100) of FIG. 16 can receive the first downlink channel and the second downlink channel from the second device (200) in the first slot through one or more transceivers. That is, one or more processors (202) of the second device (200) can transmit the first downlink channel and the second downlink channel to the first device (100) through one or more transceivers (206). Based on the number of PRBs allocated for each of the first downlink channel and the second downlink channel being less than or equal to a first threshold, one or more processors (102) can decode the first downlink channel and the second downlink channel.

Furthermore, one or more memories (104) of the first device (100) may store commands for performing the method described in the example of FIG. 8 or the examples described below when executed by one or more processors (102).

FIG. 8 is a drawing for explaining a process in which a UE performs communication according to one embodiment of the present disclosure.

The UE may receive the first downlink channel from the base station in slot n (n is an integer greater than or equal to 0) (S810).

That is, the UE may receive information for scheduling the first downlink channel in slot n from the base station.

Here, the first downlink channel may be at least one of a unicast channel, a multicast channel, or a broadcast channel. For example, the first downlink channel may include a PDSCH scheduled by a DCI that is CRC-scrambled by an MCCH-RNTI or a G-RNTI.

Based on the number of PRBs allocated for the first downlink channel being less than or equal to the second threshold, the UE may process reception of the first downlink channel (S820).

That is, based on the number of PRBs allocated for the first downlink channel being less than or equal to the second threshold, the UE may process/decode scheduling of the first downlink channel.

Here, the second threshold value may be determined differently depending on the SCS value, similar to the first threshold value of FIG. 7. For example, based on the SCS being set to 15 kHz, the second threshold value may be 25. And, based on the SCS being set to 30 kHz, the first threshold value may be 12.

For example, if the number of PRBs allocated for the first downlink channel exceeds the second threshold, and the reception of the first downlink channel is a repetitive reception or the second downlink channel is received in slot n+1, the reception of the first downlink channel may not be processed by the UE. That is, if the number of PRBs allocated for the first downlink channel exceeds the second threshold, and the reception of the first downlink channel is a repetitive reception or the second downlink channel is received in slot n+1, the UE may not be required to process the first downlink channel received in slot n.

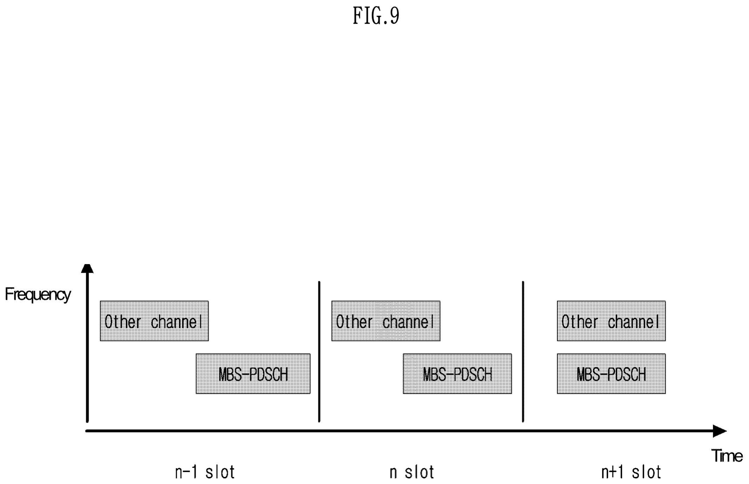

The method described in the example of FIG. 9 can be performed by the first device (100) and the second device (200) of FIG. 16. That is, the UE may be implemented as the first device (100) of FIG. 16, and the base station can be implemented as the second device (200). For example, one or more processors (102) of the first device (100) of FIG. 16 can receive a first downlink channel from the second device (200) through one or more transceivers (106) in slot n (n is an integer greater than or equal to 0). That is, one or more processors (202) of the second device (200) can transmit the first downlink channel to the first device (100) through one or more transceivers (206) in slot n (n is an integer greater than or equal to 0). Based on the number of PRBs allocated for the first downlink channel being less than or equal to the second threshold, one or more processors (102) can process reception of the first downlink channel.

Furthermore, one or more memories (104) of the first device (100) may store commands for performing the method described in the example of FIG. 9 or the examples described below when executed by one or more processors (102).

Hereinafter, various methods for a UE (e.g., an eRedCap UE) to receive an MBS channel in a narrowband are described.

Embodiment 1

Embodiment 1 relates to a method of operating bandwidth differently depending on the HARQ feedback form of multicasting.

In the case of broadcasting (or broadcast channel/transmission), since there is no HARQ feedback, the procedure can proceed similarly to the SIB or paging information transmission/reception procedure. However, in the case of multicasting, three HARQ feedback modes (e.g., ACK/NACK mode, Nack-only mode, NO HARQ mode) can be configured/proceeded.

Here, the ACK/NACK mode is also applied to basic unicast transmission and reception procedures, and the NO HARQ mode can be a general term for procedures in which ACK/NACK transmission is not performed, such as SIB or paging information transmission and reception procedures. The NACK-only mode may be applied to MBS-based multicast channel transmission and reception procedures. The NACK-only mode is a general term for a mode in which feedback information is not transmitted in an ACK situation, and NACK-based feedback is transmitted in a NACK situation.

As described above, in the case of broadcast transmission without HARQ ACK/NACK transmission set up, no additional relaxation procedure of processing time is required, so a bandwidth of up to 20 MHz can be used. However, in the case of ACK/NACK or NACK-only mode, additional relaxation time may be required when 20 MHz bandwidth is used. Therefore, in Embodiment 1, a bandwidth operation method according to the HARQ feedback form during multicast channel transmission and reception will be described.

Embodiment 1-1

Embodiment 1-1 relates to a method of operating multicasting (i.e., operating a transmission and reception procedure of a multicast channel) within a bandwidth of up to 20 MHz when the NO HARQ mode is applied.

When the NO HARQ mode is configured via higher layer signaling (e.g., RRC signaling) or the real-time HARQ mode is indicated as NO or dynamic in DCI format 4_2, multicasting operation can be performed within a bandwidth of up to 20 MHz. Additionally or alternatively, when the NO HARQ mode is indicated via DCI or the HARQ disabled mode is indicated via RRC signaling, multicasting operation can be performed within a bandwidth of up to 20 MHz.

Embodiment 1-2

Embodiment 1-2 relates to a method in which a multicast channel is limited to be allocated/scheduled within a 5 MHz bandwidth when the ACK/NACK mode or the NACK-only mode is indicated/configured. That is, when the ACK/NACK mode or the NACK-only mode is indicated/configured, a multicast channel may be allocated/scheduled as many times as the number of PRBs corresponding to the 5 MHz bandwidth.

When HARQ feedback is established via higher layer signaling or real-time HARQ mode is indicated as NO or dynamically in DCI format 4_2, multicast channels may be limited to be allocated/scheduled within a 5 MHz bandwidth. Additionally or alternatively, when HARQ feedback is indicated to be enabled via DCI or NO HARQ mode is indicated via DCI, multicast channels may be allocated/scheduled for the number of PRBs corresponding to the 5 MHz bandwidth.

As an example of the present disclosure, multicast channel transmission and reception may be performed within a bandwidth of up to 20 MHz only when the NACK-only mode is applied (e.g., when the NACK-only mode is configured via RRC signaling), thereby improving operational flexibility.

Embodiments 1-1 and 1-2 may be utilized in the three HARQ feedback modes described above, but additional HARQ feedback modes may be utilized. For example, multicasting (i.e., transmission and reception of multicast channels) may be performed only in RRC_inactive mode or RRC_connected mode. For example, multicasting may be configured to be applied only in RRC_inactive mode or RRC_connected mode via RRC signaling.

Additionally or alternatively, Embodiments 1-1 and 1-2 may be configured to be utilized only when the UE type is an eRedCap UE via RRC signaling. As another example, the ACK/NACK mode or the NACK-only mode may be configured to be applied only to eRedCap UEs via RRC signaling.

That is, if the number of allocated PRBs indicated through the FDRA field of the PDCCH is less than or equal to the number of PRBs corresponding to a 5 MHz bandwidth, ACK/NACK or NACK-only based transmission may be performed. If the number of allocated PRBs indicated through the FDRA field of the PDCCH is greater than or equal to the number of PRBs corresponding to a 5 MHz bandwidth, HARQ feedback transmission may not be performed. In this case, the network may recognize non-transmission of HARQ feedback as ACK or NACK.

Embodiment 1-3

In one embodiment of the present disclosure, when the number of PRBs scheduled in multicasting exceeds the number of PRBs corresponding to a 5 MHz bandwidth, it is processed in NO HARQ mode, and when the number of PRBs scheduled in multicasting is less than or equal to the number of PRBs corresponding to a 5 MHz bandwidth, ACK or NACK may be transmitted.

The above-described embodiment is a new HARQ mode, and the new HARQ mode may be configured via RRC signaling for the eRedCap UE. When the ACK/NACK mode or the NACK-only mode is configured, the base station may configure a multicast channel with a number of PRBs greater than or equal to a 5 MHz bandwidth. In this case, if there is no HARQ feedback, the base station can recognize it as a NACK or ACK.

As another example of this, when the NACK-only mode is configured, scheduling may be allowed for the number of PRBs corresponding to a 20 MHz bandwidth. Scheduling may be allowed for the number of PRBs corresponding to a 20 MHz bandwidth only when PUCCH resources for NACK-only based feedback transmission are configured or when the NACK-only mode is configured via RRC signaling.

Embodiment 1-3 relates to a method of performing ACK/NACK transmission (or NACK-only transmission) or non-transmission of feedback according to the capabilities of a UE, rather than processing/determining HARQ feedback based on the number of PRBs corresponding to a specific bandwidth. That is, Embodiment 1-3 may be processed according to the UE implementation. Additionally or alternatively, when a specific number or more of PRBs are scheduled for an eRedCap UE, whether to transmit or receive feedback can be determined according to the UE capabilities.

Embodiment 1-4

In one embodiment of the present disclosure, when MBS-related information is configured (i.e., when broadcast or multicast data/channel is transmitted and received), repeated transmission may be performed/applied only in a specific bandwidth (e.g., 5 MHz BWP in the case of an eRedCap UE). In this case, repeated operation may be performed only in the specific bandwidth regardless of the presence or absence of HARQ feedback.

Embodiment 1-5

In one embodiment of the present disclosure, for a narrowband UE (e.g., an eRedCap UE), it is assumed that a number of PRBs greater than or equal to the number of PRBs corresponding to the bandwidth that can be processed within a single slot (e.g., the number of PRBs corresponding to a 5 MHz bandwidth in the case of an eRedCap UE) are scheduled. In this case, if feedback is required for the scheduling, the eRedCap UE may not be expected to complete decoding within the PDSCH processing time or may not be required to transmit feedback.

Embodiment 1-6

In one embodiment of the present disclosure, when repeated transmission is performed, the HARQ feedback procedure may be omitted. In this case, when a multicast channel is transmitted and received, scheduling may be performed within the maximum bandwidth (e.g., up to 20 MHz for an eRedCap UE).

Embodiment 1-7

In one embodiment of the present disclosure, it is assumed that the HARQ feedback mode for multicast PDSCH transmission is configured to ACK/NACK mode or NACK-only mode. In this case, if PRBs exceeding the number of PRBs corresponding to a specific bandwidth (e.g., up to 5 MHz for an eRedCap UE) are scheduled, the UE may transmit a PUCCH including NACK information to the base station.

Embodiment 1-8

In one embodiment of the present disclosure, a multicast SPS PDSCH (i.e., an SPS transmission) may be allocated/scheduled within a bandwidth of up to 5 MHz. The above-described operation may also be applied to a PDSCH scheduled by a DCI CRC-scrambled with a G-CS-RNTI. As another example, the above-described operation may be applied until the SPS operation of the multicast SPS PDSCH is deactivated.

If PRBs exceeding the number of PRBs corresponding to a specific bandwidth are scheduled by the initial PDCCH, problems with PDSCH reception may occur until the SPS operation is deactivated. Therefore, SPS transmission may be limited to be performed within a 5 MHz bandwidth.

For SPS transmission, activation or deactivation can be configured by RRC signaling rather than by PDDCH. In this case, since the number of PRBs may be configured by RRC signaling, HARQ feedback can be disabled for the 20 MHz bandwidth.

When SPS transmission is activated or deactivated by DCI (e.g., DCI CRC scrambled by G-CS-RNTI), ACK/NACK transmission may be performed even if HARQ feedback is disabled for the first or last DCI. Meanwhile, ACK/NACK transmission can also be performed when PRBs greater than the number of PRBs corresponding to a specific 5 MHz bandwidth are scheduled. In this case, when the base station indicates the eRedCap UE to have a sufficient K1 value (i.e., a time delay value from the time when the PDSCH is transmitted until the ACK/NACK is transmitted) or cannot indicate an insufficient K1 value (i.e., when HARQ feedback transmission is difficult), the eRedCap UE may unconditionally transmit NACK (e.g., skip or drop the PDSCH transmission) or perform an operation according to the UE implementation. As another example, a specific K1 value, x, may be indicated/defined/configured, and the eRedCap UE may expect a K1 greater than or equal to x. If a K1 less than or equal to x is indicated, the eRedCap UE may transmit a NACK (e.g., skip or drop a PDSCH transmission) or perform an action depending on the UE implementation.

For example, in the case of G-RNTI, PRBs greater than or less than the number of PRBs corresponding to a 5 MHz bandwidth may be scheduled depending on whether HARQ feedback is enabled/disabled. In the case of G-CS-RNTI, PRBs less than or equal to the number of PRBs corresponding to a 5 MHz bandwidth may be scheduled regardless of whether HARQ feedback is enabled/disabled.

Embodiment 1-8

In one embodiment of the present disclosure, if RRC signaling related to HARQ feedback (e.g., "Harq-FeedbackEnablerMulticast-r17") is not transmitted to the UE, HARQ feedback disablement may be applied. In this case, multicast PDSCH may be scheduled on a BWP of up to 20 MHz. **If** the RRC signaling related to the HARQ feedback is transmitted to the UE, multicast PDSCH may be scheduled as many times as the number of unicast-based UE processing PRBs (e.g., in the case of a RedCap UE, the number of PRBs corresponding to a 5 MHz bandwidth).

As an example of the present disclosure, when a HARQ process ID is disabled, a UE (e.g., a non-RedCap UE) may not be expected to receive another PDCCH carrying a DCI scheduling a PDSCH or a slot aggregation PDSCH set scheduled for a given HARQ process, or may not be expected to receive another PDSCH without that PDCCH for a given HARQ process starting from $T_{proc,1}$ after reception of the last PDSCH or slot aggregation PDSCH for that HARQ process is finished. That is, when consecutive PDCCHs are scheduled for the same HARQ process ID, the UE may not be expected to receive the PDSCH or PDCCH during $T_{proc,1}$. Meanwhile, since the eRedCap UE may process PRBs corresponding to a 5 MHz bandwidth in a single slot, if PRBs exceeding the number of PRBs corresponding to a 5 MHz bandwidth (e.g., PRBs of a multicast channel) are scheduled, additional time may be applied to the eRedCap UE for PRB processing. Accordingly, the stability of the eRedCap UE's multicast PDSCH processing can be increased.

Embodiment 1-9

In one embodiment of the present disclosure, it is assumed that scheduling is performed continuously for a deactivated HARQ process ID. While such scheduling is not expected during the $T_{proc1}$ time, when scheduling is performed for a PRB of 5 MHz or more (e.g., a PRB of a multicast channel), an additional processing time margin may be configured/indicated for the eRedCap UE.

For example, the processing time margin may be defined as 1 slot. That is, when a PRB corresponding to a 5MHz bandwidth is allocated, the UE may not expect to receive another PDCCH for "$T_{proc1}$ + 1 slot" (e.g., 1sm in 15KHz SCS and 0.5ms in 30KHz SCS).

Embodiment 1-10

In one embodiment of the present disclosure, when the same HARQ process ID is assigned to a disabled HARQ process ID, the number of PRBs of a multicast PDSCH may be limited to the number of PRBs corresponding to a 5 MHz bandwidth. And, for other process IDs, the number of PRBs of a multicast PDSCH may be greater than or equal to the number of PRBs corresponding to a 5 MHz bandwidth.

Embodiment 1-11

In the case of eRedCap UEs, in the case of a disabled HARQ process ID, the process ID may be restricted from being allocated consecutively.

Embodiment 2

Embodiment 2 relates to a processing method when an MBS channel is FDMed in the same slot as another channel but overlaps in an OFDM symbol. Embodiment 1 relates to a single MBS channel, and Embodiment 2 relates to a case where multiple channels are multiplexed in the frequency domain within the same slot and overlap in an OFDM symbol.

That is, Embodiment 2 relates to a processing method when multiple PDSCH channels overlap in the time domain, as illustrated in FIG. 9. Embodiment 2 may be limited to the RRC_Connected state, but is not limited thereto, and may also be applied to the RRC_Inactive state. In addition, Embodiment 2 relates to an eRedCap UE capable of processing PDSCHs that can be allocated to a 5 MHz bandwidth in one slot.

Embodiment 2-1

In one embodiment of the present disclosure, when a broadcast (i.e., a broadcast-based channel) overlaps with another PDSCH, the UE may decode both the broadcast-based channel and the other PDSCH. In this case, the broadcast-based channel can be limited to being scheduled in the number of PRBs corresponding to a 5 MHz bandwidth.

For example, a broadcast-based channel may overlap with unicast PDSCH(s) in a single slot. In this case, the broadcast-based channel may include a broadcast channel associated with MCCH-RNTI (i.e., MBS PDSCH) and/or MBS PDSCH. For example, scheduling may be limited to the number of PRBs corresponding to a 5 MHz bandwidth only for the broadcast channel associated with MCCH-RNTI, but is not limited thereto. In addition, the UE may transmit UE capabilities related to overlapping processing between the broadcast-based channel and other channels to the base station.

As an example of the present disclosure, if a broadcast-based channel and a PDSCH scheduled with a DCI CRC-scrambled with a C-RNTI (hereinafter, a PDSCH associated with a C-RNTI) overlap in a single slot, the UE may drop the PDSCH associated with the C-RNTI. As another example, if a broadcast-based channel and a PDSCH scheduled with a DCI CRC-scrambled with a G-RNTI (hereinafter, a PDSCH associated with a G-RNTI) overlap in a single slot, the UE may drop the broadcast-based channel. However, this is only an embodiment, and if a broadcast-based channel and a PDSCH associated with a C-RNTI/G-RNTI overlap in a single slot, which channel to drop/skip may be predefined or configured by an RRC signal.

Embodiment 2-2

Embodiment 2 relates to a UE processing method when a multicast channel overlaps with another PDSCH. In this case, the multicast channel may be scheduled to a number of PRBs corresponding to a 5 MHz bandwidth or less, regardless of the HARQ feedback mode, but is not limited thereto. In this case, the UE may decode the entire channel, but it may be difficult for an eRedCap UE to decode the entire channel. Therefore, Embodiment 2 may be subject to the conditions described below.

For example, when HARQ feedback is configured for a multicast channel, the multicast channel may be scheduled for the number of PRBs corresponding to a bandwidth of up to 5 MHz. As another example, when the NO HARQ mode is configured via RRC signaling or the NO HARQ feedback mode is indicated via DCI, the multicast channel may be scheduled for the number of PRBs corresponding to a bandwidth of up to 20 MHz.

Embodiment 2 relates to a processing operation of a UE when a multicast channel overlaps with a unicast PDSCH in OFDM symbol units in the time domain.

In addition, Embodiment 2 may also be applied when ACK/NACK mode or NACK-only mode is configured for MBS PDSCH (e.g., multicast PDSCH). In this case, feedback may not be transmitted from the UE only when ACK/NACK mode is configured. Feedback transmission may be performed differently depending on the UE implementation, and HARQ feedback may be transmitted or omitted depending on the UE capability.

In addition, Embodiment 2 may be applied when HARQ feedback disabling is configured for multicasting.

Embodiment 2-2-1

When a multicast channel overlaps with another PDSCH, the multicast channel may be scheduled to a number of PRBs less than or equal to a 5 MHz bandwidth, regardless of the HARQ feedback mode, but is not limited thereto. In this case, the UE may not expect to decode multiple channels scheduled in a slot, and the method described below may be utilized.

As an example of the present disclosure, for MBS-based channels (e.g., broadcast-based channels and/or multicast channels), the scheduling described above may not be expected. For example, if HARQ disabling mode is configured for a multicast channel via RRC signaling, the UE may decode the multicast channel and another PDSCH channel overlapping with the multicast channel. As another example, if HARQ disabling mode is indicated for a multicast channel via DCI, the UE may not expect the scheduling.

In another example of the present disclosure, a UE may drop (or skip) an MBS-based channel (e.g., a broadcast-based channel or/and a multicast channel). When repeated transmission is performed, an MBS-based channel may be dropped (or skipped) on an OFDM symbol in an overlapping slot. For example, when an ACK/NACK mode or a NACK-only mode is configured for a multicast channel, the UE may drop (or skip) the multicast channel. In another example, when a HARQ disabling mode is configured for a multicast channel via RRC signaling (or DCI), the UE may decode the multicast channel and another PDSCH channel overlapping with the multicast channel. In another example, when a HARQ deactivation mode is indicated for a multicast channel via DCI (or RRC signaling), the UE may drop (or skip) the multicast channel.

Additionally or alternatively, if the sum of the number of PRBs of each of the two channels (i.e., the multicast channel and another PDSCH channel overlapping with the multicast channel) exceeds the number of PRBs corresponding to a 5 MHz bandwidth, the UE may drop the multicast channel. In this case, the two channels may be FDMed in OFDM symbols. However, if the sum of the PRBs of each of the multicast channel and another PDSCH channel overlapping with the multicast channel is less than or equal to the number of PRBs corresponding to a 5 MHz bandwidth, the UE may decode both of the two channels.

Embodiment 2-3

In one embodiment of the present disclosure, when the number of PRBs of a scheduled multicast PDSCH is greater than or equal to the number of PRBs corresponding to a 5 MHz bandwidth (e.g., when HARQ feedback is disabled), the UE may skip without decoding either the multicast PDSCH or another channel overlapping with the multicast PDSCH. The method according to embodiment 2-3 may be used when the other channel overlapping with the multicast channel is a specific channel (e.g., a unicast PDSCH or paging triggered SI).

Embodiment 2-4

In one embodiment of the present disclosure, when a multicast PDSCH is scheduled for a number of PRBs corresponding to a bandwidth of up to 5 MHz (e.g., when an ACK/NACK mode or a NACK-only mode is configured), a UE may drop the multicast PDSCH or one of other channels overlapping with the multicast PDSCH without decoding it. The method according to embodiment 2-4 may be used when the other channel overlapping with the multicast channel is a specific channel (e.g., a unicast PDSCH or a paging triggered SI).

Embodiment 2-5

In one embodiment of the present disclosure, when HARQ feedback is configured (for a multicast channel), the UE may drop one of the multicast PDSCH or another channel overlapping with the multicast PDSCH without decoding it. The method according to embodiment 2-5 may be used when the other channel overlapping with the multicast channel is a specific channel (e.g., a unicast PDSCH or paging triggered SI).

Additionally, it is assumed that unicast PDSCH and multicast PDSCH overlap or do not overlap in one slot in the time domain. In this case, if the sum of PRBs of each of the unicast PDSCH and multicast PDSCH (or the number of PRBs of either the unicast PDSCH or the multicast PDSCH) exceeds the number of PRBs corresponding to a 5 MHz bandwidth and/or if HARQ feedback is configured, the UE may transmit a NACK without decoding the multicast PDSCH. Accordingly, the UE may induce retransmission from the base station.

Embodiment 2-6

In one embodiment of the present disclosure, even if two channels (e.g., a unicast PDSCH and a multicast PDSCH, etc.) within one slot overlap or do not overlap each other in the time domain, if the sum of the number of PRBs of each of the unicast PDSCH and the multicast PDSCH exceeds the number of PRBs corresponding to a 5 MHz bandwidth, the UE may transmit a NACK as HARQ feedback for the multicast PDSCH or perform DTX processing for the multicast PDSCH.

As another example, if the sum of the number of PRBs of each of the unicast PDSCH and the multicast PDSCH is less than or equal to the number of PRBs corresponding to a 5 MHz bandwidth, the UE may decode both the unicast PDSCH and the multicast PDSCH.

In Embodiment 2-6, "the number of PRBs corresponding to a 5 MHz bandwidth" may be replaced with another specific value. Here, the other specific value may be determined/configured by UE capability information reported by the UE to the base station or RRC signaling, and may also be predefined.

Embodiment 2-7

In one embodiment of the present disclosure, if the sum of the number of PRBs allocated to a plurality of channels scheduled/allocated to a single slot (i.e., a plurality of overlapping channels in a single slot) is less than or equal to a specific value (e.g., the number of PRBs corresponding to a 5 MHz bandwidth), the UE may decode the plurality of channels. In addition, the UE may not expect a case where the sum of the number of PRBs allocated to a plurality of channels scheduled/allocated to a single slot exceeds the specific value.

For example, one of the plurality of channels may be a multicast channel (e.g., a multicast PDSCH). And, when the NO HARQ feedback mode is configured, the UE may decode two or more channels regardless of the number of PRBs of the MBS PDSCH.

As another example, when ACK/NACK mode or NACK-only mode is configured for a multicast channel, the UE may not expect the scheduling described above (e.g., scheduling such that the sum of the number of PRBs allocated to multiple channels scheduled/allocated to a single slot is less than or greater than a certain value).

When the HARQ disabling mode is configured for a multicast channel via RRC signaling (or DCI), the UE may decode multiple channels overlapped in a single slot. In addition, when the HARQ disabling mode is indicated for a multicast channel via DCI (or RRC signaling), the UE may not expect the scheduling described above.

Embodiment 2-8

Embodiment 2-8 relates to the operation of a UE when an MBS channel (e.g., a multicast PDSCH or a broadcast PDSCH) overlaps with another channel (e.g., a unicast channel), and the sum of PRBs of each of the MBS PDSCH and the other channel is greater than or equal to a specific PRB value (e.g., the number of PRBs corresponding to a 5 MHz bandwidth).

For example, if the MBS channel is a broadcast channel associated with the MCC-RNTI, the UE may decode both the MBS channel and the other channel.

As another example, the UE may transmit UE capability information related to processing of the MBS channel and other channels overlapping it to the base station. Then, the UE may decode the MBS channel and other channels overlapping it in a single slot according to the UE capability.

As another example, if the MBS channel is a channel associated with the G-RNTI of the broadcast, the UE may decode both the MBS channel and other channels. However, if the MBS channel is repeatedly transmitted, the UE may drop the MBS channel.

As another example, if the MBS channel is a broadcast channel or a multicast channel, the UE may not expect the scheduling described above. In this case, if the ACK/NACK mode or the NACK-only mode is configured for the multicast channel, the UE may not expect the scheduling described above. If the HARQ disabling mode is configured for the multicast channel via RRC signaling, the UE may decode both the multicast channel and other channels. If the HARQ disabling mode is configured for the multicast channel via DCI, the UE may not expect the scheduling described above.

As another example, if the MBS channel is a broadcast channel or a multicast channel, the UE may drop the MBS channel. For example, if the broadcast channel is a broadcast channel associated with MCCH-RNTI, the UE may drop the unicast channel. If the MBS channel performs repeated transmission, the UE may drop the MBS channel or the unicast channel in a slot where overlap occurs between the MBS channel and the unicast channel. If the ACK/NACK mode or the NACK-only mode is configured for the multicast channel, the UE may drop the MBS channel or the unicast channel. If the HARQ disable mode is configured for the multicast channel via RRC signaling, the UE may decode both the multicast channel and other channels. If the HARQ disable mode is configured for the multicast channel via DCI, the UE may drop the multicast channel.

As another example, when ACK/NACK or NACK-only data is transmitted for a multicast channel, the UE may decode both the multicast and other channels overlapping with the multicast. The above-described operation may be performed only when the NACK-only mode is configured. As another example, the above-described operation may be performed only when the NACK-only mode and the NACK-only mode PUCCH resource are configured.

As another example, if the sum of PRBs of each of multiple overlapping channels (e.g., two channels) in a single slot is greater than or equal to the number of PRBs corresponding to a 5 MHz bandwidth, the eRedCap UE may not perform feedback transmission for multiple channels or may process multiple channels as NACKs (when NACK-only or ACK/NACK is configured).

As another example, if the sum of PRBs of each of multiple overlapping channels (e.g., two channels) in a single slot is greater than or equal to the number of PRBs corresponding to a 5 MHz bandwidth (when NACK-only or ACK/NACK is configured), feedback transmission for multiple channels may be performed depending on the UE implementation.

Embodiment 2-9

In one embodiment of the present disclosure, when ACK/NACK feedback of a multicast channel is required, HARQ feedback transmission of the multicast channel may be omitted or NACK transmission may be performed.

Embodiment 2-10

Embodiment 2-10 relates to a method in which a unicast SPS PDSCH and a multicast SPS PDSCH are transmitted overlapping on an OFDM symbol in the same slot.

For example, a UE may not expect a case where a unicast SPS PDSCH and a multicast SPS PDSCH overlap. If both channels are transmitted as SPS or if one of the two channels is transmitted as SPS, the UE may not expect a case where a unicast SPS PDSCH and a multicast SPS PDSCH overlap.

Since SPS-based transmission has less flexibility than PDCCH-based dynamic scheduling, the base station may not schedule unicast SPS PDSCH and multicast SPS PDSCH to overlap in one slot.

In another example of the present disclosure, one of a unicast channel (e.g., a unicast SPS PDSCH) and an MBS channel (e.g., a multicast SPS PDSCH) overlapping in the same slot may be dropped. Since the multicast SPS PDSCH is likely to have a lower priority than the unicast SPS channel, the UE may drop the multicast SPS PDSCH, and the HARQ mode for the multicast SPS PDSCH may be configured to a NO HARQ mode or a NACK may be transmitted for the multicast SPS PDSCH. However, among the unicast channel (e.g., a unicast SPS PDSCH) and the MBS channel (e.g., a multicast SPS PDSCH) overlapping in the same slot, the unicast channel may be dropped. That is, the priorities of the channels overlapping in the same slot may be defined/configured in advance.

As another example of the present disclosure, even if the same multicast (SPS) channel overlaps the same slot, the UE may perform the above-described operation (e.g., dropping one of the multiple multicast (SPS) channels, etc.). As another example, the UE may not expect the same multicast (SPS) channel to overlap the same slot.

Embodiment 3

Embodiment 3 relates to a method of processing multicast PDSCH in an RRC_Inactive state and an SDT (small data transmission) situation.

MBS-based PDSCH may include multicast PDSCH and broadcast-based PDSCH. In the case of broadcast-based PDSCH, the method according to embodiment 1 may be applied even in the RRC_Inactive state. In a basic wireless communication system, multicasting operations (e.g., transmission and reception of multicast PDSCH) may not be performed in the RRC_Inactive state. However, for service continuity, multicast PDSCH transmission and reception procedures may be possible in the RRC_Inactive state, and the above-described operations may be performed by a narrowband device (e.g., an eRedCap UE).

Embodiment 3-1

In one embodiment of the present disclosure, a NO HARQ mode for multicast PDSCH may be configured for an eRedCap UE in the RRC_Inactive state. Accordingly, the eRedCap UE may expect scheduling of the entire bandwidth (e.g., scheduling of multicast PDSCH).

Here, for eRedCap UEs, scheduling may be possible within a bandwidth of up to 20 MHz. For example, if HARQ feedback-related information/command is transmitted through higher layer signaling or DCI, etc., the UE may not receive the corresponding service (e.g., multicast PDSCH). As another example, a NACK-only mode other than the NO HARQ mode may be configured for the eRedCap UE, and the eRedCap UE may check the overall service status even in an idle state while receiving the service.

Embodiment 3-2

In one embodiment of the present disclosure, in the case of SDT in the RRC_Inactive state, unlike Embodiment 1, it may be possible to configure a NACK-only mode or an ACK/NACK mode with feedback for a general UE (i.e., a non-RedCap UE) or an eRedCap UE.

Since the RRC_Inactive state is similar to the RRC_Idle state, it may be inappropriate to allocate all uplink resources for feedback to a specific UE. However, while SDT services may generally be provided in the RRC_Idle state, UEs may momentarily perform operations similar to those in the RRC_Connected state. Therefore, for SDT services, a mode that enables feedback to UEs can be configured.

Additionally or alternatively, due to the high complexity of the ACK/NACK mode, the ACK/NACK mode may not be suitable for RRC_inactive. Therefore, for SDT, only the NACK_only mode, in which common PUCCH resources are limited, may be applied.

Additionally or alternatively, when feedback-related information is configured for an eRedCap UE, the entire bandwidth may be used or the number of PRBs corresponding to a specific bandwidth may be scheduled, depending on the type and form of the feedback. In this case, the method applied to the multicast PDSCH in the RRC_Connected state of Embodiment 1 may be utilized.

## Embodiment 4

Embodiment 4 relates to various methods for processing a broadcast channel. As described above, an eRedCap UE may process a broadcast channel within a bandwidth of up to 20 MHz. In general, when a downlink channel is scheduled by DCI 4_0 CRC-scrambled by MCCH-RNTI, the data rate of the downlink channel is likely to not exceed 10 Mbps. Therefore, the number of PRBs allocated to an MCCH-RNTI-based broadcast channel may be limited to no more than the number of PRBs corresponding to a 5 MHz bandwidth. In addition, the number of PRBs allocated to a G-RNTI-based broadcast channel may be limited to no more than the number of PRBs corresponding to a 20 MHz bandwidth.

### Embodiment 4-1

In one embodiment of the present disclosure, in the case of broadcasting, an MCCH-RNTI-based PDSCH (i.e., a PDSCH scheduled by MCCH-RNTI) may be scheduled within 5 MHz. That is, the number of PRBs allocated to the MCCH-RNTI-based PDSCH may be limited to be less than or equal to the number of PRBs corresponding to a 5 MHz bandwidth.

Since the MCCH-RNTI-based channel includes control information, a wide bandwidth for the channel may not be required. In addition, whether the MCCH-RNTI-based PDSCH is scheduled for the number of PRBs corresponding to a 5 MHz bandwidth may be predefined, but is not limited thereto. Whether the MCCH-RNTI-based PDSCH is scheduled for the number of PRBs corresponding to a 20 MHz bandwidth may be predefined or may be configured by higher layer signaling.

### Embodiment 4-2

In one embodiment of the present disclosure, the maximum number of PRBs that may be allocated for a multicast channel may be flexibly configured/indicated by higher layer signaling or/and DCI for each HARQ mode and/or each 5/20 MHz bandwidth. Here, the HARQ mode may include at least one of an ACK/NACK mode, a NACK-only mode, a HARQ disabled mode, or a DCI-enabled mode.

For example, it is assumed that a multicast channel needs to be allocated within a 5 MHz bandwidth. In this case, if the base station indicates a PRB corresponding to the 5 MHz bandwidth (i.e., a PRB of the multicast channel) through the FDRA of the PDCCH, the UE may transmit an ACK/NACK to the base station or transmit a NACK to the base station (e.g., in the case of a NACK-only HARQ feedback mode).

For eRedCap UEs, UE capability information (e.g., "fdm-BroadcastUnicast-r17") indicating whether overlapping of group-common PDSCH and unicast PDSCH for broadcast in RRC_connected state within a single slot is supported may not be applied. Accordingly, simultaneous reception of different PDSCHs may be restricted for eRedCap UEs, and margin may be added for processing time relaxation.

### Embodiment 4-3

In one embodiment of the present disclosure, for an eRedCap UE, simultaneous reception of a broadcast MBS channel and a unicast PDSCH may not be supported. That is, for a broadcast MBS channel and a unicast PDSCH, UE capability information (e.g., "fdm-BroadcastUnicast-r17") may not be applied to the eRedCap UE.

### Embodiment 4-4

In one embodiment of the present disclosure, for an eRedCap UE, simultaneous reception of a multicast MBS channel (e.g., a multicast PDSCH) and a unicast PDSCH may not be supported. That is, for a multicast MBS channel and a unicast PDSCH, UE capability information (e.g., "fdm-BroadcastUnicast-r17") may not be applied to the eRedCap UE.

### Embodiment 4-5

In one embodiment of the present disclosure, when simultaneous reception of different PDSCHs is supported in the same slot (e.g., overlapping of group-common PDSCH and unicast PDSCH for broadcast in RRC_connected state is supported in a single slot), the number of PDSCHs that can be FDMed in the same slot can be determined by UE capability. That is, the eRedCap UE may transmit UE capability information related to the number of PDSCHs that can be FDMed in the same slot to the base station. Accordingly, the eRedCap UE may expect that only the number of PRBs that can be processed in a single slot (e.g., PRBs corresponding to a 5 MHz bandwidth) will be allocated.

### Embodiment 4-6

In one embodiment of the present disclosure, in case of repeated transmission of MBS PDSCH, an eRedCap UE may expect that PRBs are allocated within the number of PRBs corresponding to a 5 MHz bandwidth regardless of the configuration of HARQ feedback.
When repeated transmission of MBS PDSCH is configured, eRedCap UEs may store the first received information after adding a buffer across slots. When repeated transmission of MBS PDSCH is configured, the maximum buffer may need to be continuously configured for allocation of MBS PDSCH on a 20MHz bandwidth. Therefore, when repeated transmission of MBS PDSCH is configured, the number of PRBs allocated to eRedCap UEs may be limited to a number corresponding to a 5MHz bandwidth.

### Embodiment 4-7

In one embodiment of the present disclosure, when an eRedCap UE is in RRC_connected mode, a multicast PDSCH may be scheduled within a bandwidth of up to 20 MHz. In this case, a NO HARQ mode may be configured for the UE via RRC signaling. As another example, when a NACK-only mode or an ACK/NACK mode is configured, feedback for the multicast PDSCH may be ignored or an RRC connection failure may occur.

### Embodiment 4-8

In one embodiment of the present disclosure, when the ACK/NACK mode or the NACK-only mode is configured, the eRedCap UE can expect that the SPS multicast PDSCH is allocated/scheduled within the number of PRBs corresponding to a maximum bandwidth of 5 MHz.

### Embodiment 4-9

In one embodiment of the present disclosure, in the case of multicasting and broadcasting, for narrowband communication (i.e., communication of eRedCap UEs), PRBs corresponding to a specific bandwidth within a slot may be allocated/scheduled. For example, in the case of eRedCap UEs, multicast channels and/or broadcast channels corresponding to a 5 MHz bandwidth may be allocated/scheduled, similar to unicast PDSCH.

### Embodiment 4-10

Embodiment 4-10 relates to the number of PRBs corresponding to the bandwidth of PDSCH scheduled by various types of RNTI.
As an example of the present disclosure, in the case of MCCH-RNTI, HARQ feedback may always be disabled. MBS broadcasting operation may be possible for a number of PRBs greater than or equal to a 5 MHz bandwidth. The above-described operation may be restricted to be possible only when scheduled with MCCH_RNTI. In the case of G-RNTI, since data may be scheduled in each slot, an eRedCap UE that can only schedule PRBs equal to a number of PRBs corresponding to a 5 MHz bandwidth may encounter decoding-related issues.
In another example of the present disclosure, in the case of G-RNTI, the number of PRBs corresponding to broadcasting and multicasting may be the same. For example, when HARQ feedback is disabled, PRBs (e.g., PRBs of multicast or multicast channels) greater than or equal to the number of PRBs corresponding to a 5 MHz bandwidth may be used in the RRC_connected state or RRC_inactve state. Disabling of HARQ feedback may be configured by RRC signaling. In another example, when HARQ feedback is enabled, PRBs greater than or equal to the number of PRBs corresponding to a 5 MHz bandwidth may be used. All MBS channels scheduled by G-RNTI may be restricted to be scheduled within 5 MHz. It may be difficult for an eRedCap UE to decode PRBs corresponding to a 5 MHz bandwidth within a channel with a high probability of being continuously scheduled.

As another example of the present disclosure, for G-CS-RNTI (i.e., SPS), confirmation transmission for HARQ feedback ACK may be required in various cases, such as HARQ feedback deactivation, and the following options may be applied.

Option 1: Only PRBs less than or equal to the number of PRBs corresponding to the 5 MHz bandwidth (e.g., PRBs of a multicast channel) can be allocated.

Option 2: More than the number of PRBs corresponding to the 5 MHz bandwidth (e.g., PRBs of a multicast channel) may be allocated (new UE processing time is not defined). In this case, Option 2 may be applied when HARQ feedback is disabled and the parameter related to HARQ feedback enabling for SPS PDSCH transmission (e.g., "harq-FeedbackEnablingforSPSactive") is disabled.

Meanwhile, the "dl-DataToUL-ACK list" includes values for processing HARQ feedback, and the UE may expect that one K1 value is indicated among values greater than or equal to a specific value sufficient for processing HARQ feedback. And, the UE may expect that a channel (e.g., multicast (SPS) PDSCH) is scheduled by G-CS-RNTI based on the K1 value. Since the above case requires HARQ feedback, it can be applied only when a parameter related to HARQ feedback enabling (e.g., "harq-FeedbackEnablingforSPSactive") is enabled.

Embodiment 4-11

Embodiment 4-11 relates to a UE processing method when multiple PDSCHs are scheduled in a single slot, as in Embodiment 2.

Embodiment 4-11-1

As an example of the present disclosure, when a broadcast PDSCH and a unicast PDSCH are scheduled in a single slot, the UE may decode both the broadcast PDSCH and the unicast PDSCH.

In another example of the present disclosure, a broadcast PDSCH and a unicast PDSCH may be scheduled in a single slot only when the broadcast PDSCH is scheduled by the MCCH-RNTI. If the broadcast PDSCH is scheduled by the G-RNTI, the G-RNTI may be considered identical to the C-RNTI, and it may be difficult for an eRedCap UE to process both channels simultaneously. Therefore, the UE may not expect the G-RNTI-related broadcast PDSCH and unicast PDSCH to be scheduled simultaneously.

Embodiment 4-11-2

Embodiment 4-11-2 relates to a case where a multicast PDSCH and a unicast PDSCH are scheduled in a single slot. If HARQ feedback is disabled (e.g., if HARQ feedback is disabled via RRC signaling), the following options may be applied.

Option 1: eRedCap UEs may decode multicast PDSCH and unicast PDSCH scheduled in a single slot.

Option 2: eRedCap UEs may not expect scheduling of multicast PDSCH and unicast PDSCH in a single slot.

Option 3: An eRedCap UE may drop or skip a multicast PDSCH among multicast PDSCHs and unicast PDSCHs scheduled in a single slot.

Option 4: An eRedCap UE may drop or skip a unicast PDSCH among multicast PDSCHs and unicast PDSCHs scheduled in a single slot. In this case, the eRedCap UE may not receive a unicast channel until the next slot of the slot.

As another example of the present disclosure, when HARQ feedback is enabled, the following options may be applied.

Option 1: The eRedCap UE may drop a multicast PDSCH among the multicast PDSCH and unicast PDSCH scheduled in a single slot, or transmit a NACK HARQ feedback for the multicast PDSCH to the base station.

Option 2: eRedCap UEs may not expect scheduling of multicast PDSCH and unicast PDSCH in a single slot.

Option 3: The eRedCap UE may drop or skip the unicast PDSCH among the multicast PDSCH and unicast PDSCH scheduled in a single slot. In this case, the eRedCap UE may not receive the unicast channel until the next slot of the slot.

Embodiment 4-12

In one embodiment of the present disclosure, it is assumed that a PDSCH (e.g., a multicast PDSCH, etc.) is scheduled via a DCI CRC-scrambled by a G-RNTI. In this case, if PRBs greater than or equal to the number of PRBs corresponding to a 5 MHz bandwidth are scheduled in a single slot, a gap of a specific slot (e.g., 1 slot, etc.) may be applied/added to the single slot. That is, in order for PRBs greater than or equal to the number of PRBs corresponding to a 5 MHz bandwidth (i.e., PRBs of the PDSCH) to be scheduled in a single slot, a gap adjacent to the single slot may be configured/scheduled/indicated.

The above-described operation may be applied to channels scheduled by MCCH-RNTI as well as G-RNTI. In addition, the above-described operation may be applied even when the eRedCap UE is in RRC_Inactive or RRC_Idle state. In addition, the above-described operation can be applied to PDSCH reception or P-RNTI-triggered SI acquisition operation related to SI-RNTI as well as G-RNTI.

Specifically, an eRedCap UE may decode only a specific number of PRBs (e.g., the number of PRBs corresponding to a 5 MHz bandwidth) in a single slot. Therefore, if a specific number or more of PRBs (e.g., PRBs allocated to a PDSCH) are scheduled in a single slot, a gap slot (e.g., at least 1 slot) adjacent to the single slot may be required. Accordingly, if a specific number or more of PRBs are scheduled in a single slot, at least one slot adjacent to the single slot (i.e., a slot configured as a gap) cannot be scheduled with another channel.

For example, assume that a certain number or more of PRBs are scheduled in slot n. In this case, if a channel or another PDSCH related to G-RNTI (or/and MCCH-RNTI) is scheduled on slot n+1, the eRedCap UE may skip or not decode the channel or another PDSCH related to G-RNTI (or/and MCCH-RNTI).

As another example, if a PDSCH scheduled by MSG 2 or MSG B or P-RNTI related to a random access procedure is received in slot n+1, the eRedCap UE may first process the channel scheduled in slot n+1 even if it processes the MBS PDSCH scheduled in slot n. That is, considering the priority of the PDSCH scheduled by MSG 2 or MSG B or P-RNTI related to a random access procedure, the eRedCap UE may skip the MBS PDSCH in slot n or decoding of the MBS PDSCH in slot n may not be expected.

As another example, if a PDSCH is scheduled by a specific RA-RNTI (e.g., msgB-RNTI) or P-RNTI (or SI-RNTI) in the slot n+1, the eRedCap UE may skip PRBs (e.g., PRBs of MBS PDSCH) exceeding the number of PRBs corresponding to the 5 MHz bandwidth scheduled in slot n, or decoding of the corresponding MBS PDSCH may not be expected.

As another example, if a PDSCH scheduled for slot n+1 needs to be decoded, the eRedCap UE may skip the MBS PDSCH scheduled for slot n or may not expect decoding of the MBS PDSCH. As another example, the eRedCap UE may abort the process in slot n.

As another example, for a channel scheduled in slot n+1 (e.g., a channel with HARQ feedback configured), the eRedCap UE may skip the channel or may not expect decoding of the channel. For a channel without HARQ feedback, the eRedCap UE may stop or skip decoding for the MBS PDSCH scheduled in slot n. If decoding for the MBS PDSCH scheduled in slot n is stopped, the eRedCap UE may drop the stopped MBS PDSCH.

Embodiment 4-13

In one embodiment of the present disclosure, it is assumed that when PRBs (e.g., PRBs of MBS PDSCH) corresponding to a bandwidth of 5 MHz or less are scheduled/allocated to slot n, another channel is also received in slot n. Embodiment 4-13 relates to a processing method in a case where another PDSCH is scheduled in slot n+1 in a situation where an eRedCap UE must decode each channel scheduled in slot n. In this case, multiple PDSCHs scheduled in slot n may overlap in units of OFDM symbols, but are not limited thereto.

As an example of the present disclosure, when MBS PDSCH and another channel are scheduled in slot n as described above, the eRedCap UE may drop MBS PDSCH.

As an example of the present disclosure, if there is no PDSCH requiring decoding in slot n+1, the eRedCap UE may decode all of the plurality of PDSCHs (i.e., MBS PDSCH and other PDSCHs, etc.) scheduled in slot n. Here, the other PDSCHs scheduled in slot n and/or the PDSCHs requiring decoding in slot n+1 may all be unicast PDSCHs, but are not limited thereto. In addition, if there is no PDSCH requiring decoding in slot n+1, even if the sum of the number of PRBs of the MBS PDSCH and other PDSCHs scheduled in slot n exceeds the number of PRBs corresponding to a 5 MHz bandwidth, the eRedCap UE may decode all of the MBS PDSCH and other PDSCHs scheduled in slot n.

Embodiment 4-14

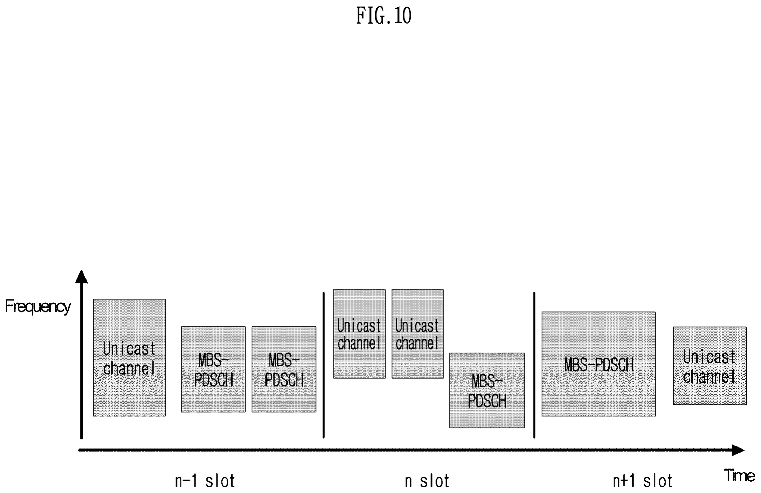

Embodiment 2 relates to a processing method when multiple channels overlap within a single slot. Meanwhile, as illustrated in FIG. 10, multiple channels within a single slot may or may not overlap within a frequency domain, although they do not overlap within a time domain. Embodiments 4-14 relate to various processing methods when multiple channels (e.g., unicast channels and/or multicast channels) are scheduled within a single slot, and a method when PRBs greater than the number of PRBs corresponding to a 5 MHz bandwidth are allocated within a single slot.

As described above, the eRedCap UE may process PRBs as many as the number of PRBs corresponding to a 5 MHz bandwidth within one slot. For example, when an MBS PDSCH (e.g., a multicast PDSCH or/and a broadcast PDSCH, etc.) and a unicast channel are scheduled in slot n, it is assumed that the number of PRBs of the MBS PDSCH is greater than or equal to the number of PRBs corresponding to a 5 MHz bandwidth, or the sum of the PRBs of each of the MBS PDSCH and the unicast channel is greater than or equal to the number of PRBs corresponding to a 5 MHz bandwidth. In this case, the MBS PDSCH and the unicast channel may or may not overlap in the time domain. For example, the eRedCap UE may skip (or drop) the MBS PDSCH or may not expect decoding of the MBS PDSCH. If HARQ feedback for MBS PDSCH is enabled, the eRedCap UE may transmit the feedback as a NACK. As another example, the eRedCap UE may not expect the number of PRBs of the MBS PDSCH to exceed the number of PRBs corresponding to a 5 MHz bandwidth. As another example, the eRedCap UE may process the MBS PDSCH and unicast PDSCH in the received/scheduled order (i.e., the OFDM symbol order within a slot), and may skip certain PRBs (e.g., PRBs exceeding a 5 MHz bandwidth range) or may not expect decoding of certain PRBs. In addition, the eRedCap UE may transmit a NACK for a channel containing a specific PRB to the base station.

Embodiment 4-15

Embodiment 4-15 relates to a processing method when one or more MBS PDSCHs and one or more unicast PDSCHs are scheduled in slot n.

As an example of the present disclosure, if up to 7 PDSCHs can be processed within a specific slot, 4 unicast PDSCHs and 3 multicast PDSCHs can be processed within the specific slot. In this case, the eRedCap UE may process the PDSCHs in the order scheduled in slot n, and can be expected to process the PDSCH(s) within a range that does not exceed the processing capability of a specific bandwidth.

For example, an eRedCap UE may process MBS PDSCH(s) and unicast PDSCH(s) in the received/scheduled order (i.e., OFDM symbol order within a slot), and may skip certain PRBs (e.g., PRBs exceeding a 5 MHz bandwidth range) or may not expect decoding of certain PRBs. In addition, the eRedCap UE may transmit a NACK for a channel including a certain PRB to the base station.

For example, if the HARQ feedback mode is ACK/NACK mode or NACK-only mode, the number of multicast PDSCHs may be counted together with the number of unicast PDSCHs. If the HARQ feedback mode is NO HARQ mode, the number of multicast PDSCHs may not be counted. In another example, feedback may not be considered or both multicast and unicast PDSCHs may be counted.

Embodiment 4-16

In one embodiment of the present disclosure, in the case of an eRedCap UE, one unicast PDSCH can be scheduled in one slot. An eRedCap UE capable of processing a PRB corresponding to a 5 MHz bandwidth in one slot (e.g., a PRB of a unicast PDSCH) can only process one unicast PDSCH in one slot.

Embodiment 4-17

In one embodiment of the present disclosure, a multicast PDSCH and a unicast PDSCH may be scheduled in the same slot. In this case, the HARQ feedback mode of the multicast PDSCH may be configured to an ACK/NACK mode or a NACK-only HARQ feedback mode. As another example, the number of all PDSCHs scheduled in slot n may be counted without considering the feedback mode.

As another example of the present disclosure, the eRedCap UE may process MBS PDSCH and unicast PDSCH in the received/scheduled order (i.e., OFDM symbol order within one slot), and may skip certain PRBs (e.g., PRBs exceeding a 5 MHz bandwidth range) or may not expect decoding of certain PRBs. In addition, the eRedCap UE may transmit a NACK for a channel including a certain PRB to the base station.

Embodiment 5

The MBS PDSCH channel may be scheduled within a 5 MHz bandwidth, but can also be scheduled in an area exceeding the 5 MHz bandwidth. In this case, the possibility that a multicast PDSCH or a broadcast PDSCH will be scheduled in consecutive slots may be higher than the possibility that a SIB-based PDSCH or a paging-based PDSCH will be scheduled in consecutive slots.

Meanwhile, as described above, an eRedCap UE may process a unicast channel within a 5 MHz bandwidth in a single slot. In the case of MBS PDSCH, PRBs can be allocated within the 5 MHz bandwidth, but PRBs exceeding the number of PRBs corresponding to the 5 MHz bandwidth (i.e., PRBs of MBS PDSCH) may also be allocated.

If repeated transmissions are performed in consecutive slots while PRBs exceeding the number of PRBs corresponding to a 5 MHz bandwidth are allocated to a single slot, processing of PDSCH scheduled in the next slot of that slot may be problematic.

When repetitive transmission is scheduled/configured and PRBs exceeding the number of PRBs corresponding to a 5 MHz bandwidth are scheduled in slot n, a processing method is described when a PDSCH repeatedly transmitted in slot n+1 and another PDSCH are received together.

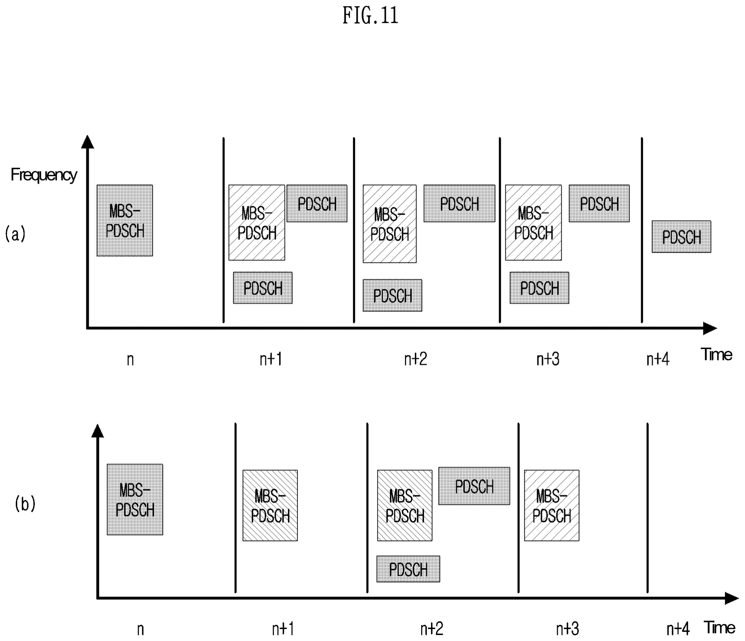

As an example of the present disclosure, as illustrated in FIG. 11, if a PRB exceeding the number of PRBs corresponding to a 5 MHz bandwidth in slot n (i.e., a PRB of an MBS PDSCH) is allocated, additional processing time may be required to process a PDSCH exceeding 5 MHz in the next slot. Accordingly, if repetitive transmission is not configured, some of the PDSCHs scheduled/received in slot n+1 may be processed. However, if PDSCHs are received continuously, processing of other PDSCHs may not be possible in the slot in which repetitive transmissions are received.

Hereinafter, when repetitive transmission is configured/scheduled, a processing method is described when PRBs less than the number of PRBs corresponding to a bandwidth of 5 MHz (e.g., PRBs of MBS PDSCH) are scheduled.

For eRedCap UEs, when repetitive transmission is configured, restrictions on scheduling PRB allocation within a 5MHz bandwidth may be defined/configured. Accordingly, when repetitive transmission is scheduled/performed and another channel is scheduled/received, this may affect the decoding of the channel for each slot, as illustrated in FIG. 11.

Therefore, in a situation where PRBs (e.g., PRBs of MBS PDSCH) can be scheduled within a range exceeding 5 MHz bandwidth, when repeated transmission is configured/applied, the number of PRBs indicated through the FDRA field of DCI may be less than or equal to the number of PRBs corresponding to 5 MHz bandwidth.

The embodiment described below relates to a processing method of an eRedCap UE when (repeated) transmission of a channel (e.g., MBS PDSCH) is scheduled within or exceeding a 5 MHz bandwidth.

Embodiment 5-1

In one embodiment of the present disclosure, the eRedCap UE may only process the MBS PDSCH scheduled/received in the first slot, and may not process the MBS PDSCH repeatedly transmitted in the remaining slots. That is, the eRedCap UE may not decode or skip the MBS PDSCH scheduled in the slots after slot n (i.e., slot n+1, slot n+2, slot n+3) in (a) of FIG. 11.

Embodiment 5-2

In one embodiment of the present disclosure, the number of repetition transmissions (of MBS PDSCH) may be configured to one of 2, 4, or 8 via higher layer signaling. In this case, based on the number of repetition transmissions exceeding 2 being configured, the eRedCap UE may only process channels that have been repeatedly transmitted at most 2 times. If the number of repetitions increases, problems related to decoding may occur, as illustrated in FIG. 11. As another example, a specific threshold related to the number of repetition transmissions may be configured/indicated/defined, and the eRedCap UE may decode or drop all channels that have been repeatedly transmitted less than/more than the specific threshold.

Embodiment 5-3

In one embodiment of the present disclosure, the eRedCap UE may only process channels received in even-numbered repetition slots or odd-numbered repetition slots. In this case, the type of slot processed by the eRedCap UE (i.e., even-numbered repetition slots or odd-numbered repetition slots) may be configured/indicated via DCI or RRC signaling. The even-numbered repetition slot or odd-numbered repetition slot can be determined based on the slot in which channel transmission is first performed, but can also be determined based on the slot number.

In Embodiment 5, when repeated transmission is performed and even one MBS PDSCH is not received/decoded, the eRedCap UE may transmit a NACK.

Embodiment 6

Embodiment 6 relates to a method of processing MBS PDSCH on a slot-by-slot basis for repeated transmission when PRBs (i.e., PRBs of MBS PDSCH) exceeding the number of PRBs corresponding to a 5 MHz bandwidth are scheduled in a specific slot.

When a PDSCH is scheduled within a 5 MHz bandwidth or within a range exceeding a 5 MHz bandwidth, the eRedCap UE may require additional processing time (e.g., 1 slot). That is, when processing an MBS PDSCH in slot n, if another PDSCH is scheduled in slot n+1, the eRedCap UE may not receive the MBS PDSCH (in slot n+1).

As an example of the present disclosure, as illustrated in (b) of FIG. 11, when the MBS PDSCH of slot n+1 is scheduled/transmitted, an additional PDSCH is scheduled in slot n+2 except for the repeated MBS PDSCH, and the eRedCap UE may process the MBS PDSCH of slot n+1 and stop processing the corresponding MBS PDSCH in the middle (e.g., in the middle of slot n+1 or slot n+2) and drop it.

Embodiment 6-1

In one embodiment of the present disclosure, when an MBS PDSCH is processed in slot n, if not only is there a repeated transmission of the MBS PDSCH on the next slot, but another PDSCH is scheduled/received, the eRedCap UE may not receive the MBS PDSCH processed in slot n in the next slot (e.g., slot n+1). That is, the eRedCap UE may not process reception of the repeated MBS PDSCH in slot n+1. That is, even if another PDSCH is scheduled in slot n+1, the eRedCap UE may decode the first MBS PDSCH in slot n.

Embodiment 6-2

As described above, if another PDSCH in slot n is an MBS PDSCH, regardless of whether another PDSCH is received in the next slot (e.g., slot n+1), the eRedCap UE may not process the MBS PDSCH.
That is, the eRedCap UE may skip reception of MBS PDSCHs that are repeatedly transmitted. The eRedCap UE may receive the first MBS PDSCH among the repeatedly transmitted MBS PDSCHs even if another PDSCH is scheduled in the next slot. Even if repeated transmission is not performed, reception of the MBS PDSCH in slot n may be skipped or not decoded.

Embodiment 6-3

In one embodiment of the present disclosure, the number of transmission repetitions may be configured to one of 2 to 8 via DCI or RRC signaling. This is to minimize PDSCHs that are not received when scheduling repeated transmissions.

Embodiment 6-4

In one embodiment of the present disclosure, when multiple channels are received simultaneously in a slot (e.g., when an MBS channel and another PDSCH overlap in OFDM symbol units) or when another PDSCH is scheduled in the next slot, the conditions for dropping the MBS PDSCH channel and performing repeated transmission may be applied.
Additionally, MBS PDSCHs that are not dropped during the process of repeated transmission may be combined and decoded.

Embodiment 6-5

In one embodiment of the present disclosure, when a repetitive transmission is configured/scheduled and a channel is received and decoded in a specific slot, another channel can be received and decoded in a slot after skipping one slot in the specific slot.
Reception and decoding of a PDSCH scheduled for a slot or a slot skipped based on a specific slot may not be expected. That is, the PDSCH may be skipped or not received.
If even one channel decoding is not performed by the PDSCH of a specific slot and the next slot through the method according to Embodiment 6, the eRedCap UE may transmit a NACK for the channel that was not received to the base station.

Embodiment 7

Embodiment 7 relates to a processing method in the last slot when PRBs (i.e., PRBs of MBS PDSCH) exceeding the number of PRBs corresponding to a bandwidth of 5 MHz in a specific slot are scheduled and repeated transmission is configured.
When repetitive transmission is configured, the UE may perform decoding for the corresponding channel(s) for which channel reception has been performed up to the last slot for which repetitive transmission has been configured. Processing for the last slot for which repetitive transmission has been configured may be determined depending on whether another PDSCH has been scheduled/received in the slot following the corresponding slot. That is, even if a PRB corresponding to a bandwidth of 5 MHz or more is scheduled on the preceding slot (i.e., the slot in which all MBS PDSCHs are transmitted) excluding the last slot, the channel corresponding to the PRB and another PDSCH may be received simultaneously.

Embodiment 7-1

In one embodiment of the present disclosure, when repetitive transmission is configured, the MBS PDSCH of the slot in which the last repetitive transmission is performed may not be decoded if another PDSCH is scheduled in the slot following the slot.

Embodiment 7-2

In one embodiment of the present disclosure, it is assumed that PRBs (e.g., PRBs of MBS PDSCH) greater than or equal to the number of PRBs corresponding to a 5 MHz bandwidth are scheduled and repetitive transmission is configured. At this time, as disclosed in Embodiment 4-12, it can be determined whether to drop the MBS PDSCH of the last slot in which repetitive transmission is performed or to drop the MBS PDSCH of the slot following the last slot.

Embodiment 7-3

In one embodiment of the present disclosure, when repetitive transmission is configured, if another PDSCH is simultaneously transmitted in the last slot in which repetitive transmission is configured or another PDSCH is scheduled in the next slot, the eRedCap UE may not perform reception of the MBS PDSCH of the last slot and may perform decoding on the previously received MBS PDSCH.

In another example of the present disclosure, when PRBs (i.e., PRBs of MBS PDSCH) exceeding the number of PRBs corresponding to a 5 MHz bandwidth are scheduled, repeated transmissions are restricted from being configured, or the eRedCap UE may transmit a NACK to the base station without receiving the repeatedly transmitted MBS PDSCH.

As another example of the present disclosure, if it is not possible to decode both channels scheduled in one slot, the eRedCap UE may decode one of the channels (e.g., PDSCH scheduled by SI (system information)-RNTI or PDSCH scheduled by P (paging)-RNTI) according to the priority of the two channels.

Embodiment 8

In one embodiment of the present disclosure, an eRedCap UE may operate a multicast channel within a 20 MHz bandwidth. When HARQ feedback is configured for the multicast channel, the eRedCap UE may add a relaxation time to the processing time.

That is, unlike Embodiment 1, the eRedCap UE may operate a 20 MHz bandwidth. Here, if HARQ feedback exists and ACK/NACK or NACK-only mode is configured, an additional time of X value may be required to be added to the UE processing time. Here, if there is no HARQ feedback, the X value may not be applied. Even if ACK/NACK and NACK-only mode are configured and only the number of PRBs within 5 MHz BW is allocated, the X value may not be applied.

Embodiment 8-1

In one embodiment of the present disclosure, when the NO HARQ mode is configured, the X value may not be applied to the UE processing type.

Embodiment 8-2

In one embodiment of the present disclosure, when there is HARQ feedback, the eRedCap UE may add an X value to the additional processing time. Here, the X value may be applied to the same value or different values according to the additional processing time capabilities 1 and 2. The X value can be applied differently depending on the SCS. In addition, the X value may be the same as the value applied to the decoding-related processing time of message 2 or message B in the RACH procedure. In addition, the X value can be applied even when the multicast channel is allocated within a 5 MHz bandwidth.

Embodiment 8-3

In one embodiment of the present disclosure, when the NACK-only mode is configured, the relaxation of additional processing time of the X value may not be applied to increase the flexibility of network operation.

Embodiment 8-4

In one embodiment of the present disclosure, when the FDRA information of the PDCCH in the ACK/NACK or NACK-only mode indicates PRBs greater than the number of PRBs corresponding to a 5 MHz bandwidth (i.e., when the bandwidth of the channel scheduled by the FDRA information of the PDCCH exceeds 5 MHz), an additional processing time of the value X may be applied.

And, in the ACK/NACK or NACK-only mode, if the FDRA information of the PDCCH indicates a PRB less than or equal to the number of PRBs corresponding to a bandwidth of 5 MHz (i.e., if the bandwidth of the channel scheduled by the FDRA information of the PDCCH is less than or equal to 5 MHz), the additional processing time of the X value may not be applied (X=0).

As an example of the present disclosure, in the case of an MBS channel (e.g., a multicast channel), an eRedCap UE may not expect scheduling exceeding 5 MHz. In this case, the base station may group eRedCap UEs that support 5 MHz together and schedule MBS channels for the eRedCap UEs within the 5 MHz bandwidth.

As an example of the present disclosure, in the case of an MBS channel (e.g., a multicast channel), an eRedCap UE may expect scheduling exceeding 5 MHz. In this case, there is no restriction on grouping of eRedCap UEs, and operations according to ACK/NACK mode can be considered. For example, timing relaxation may not be applied to the eRedCap UE. In another example, timing relaxation may be applied to the eRedCap UE. In another example, when a multicast PDSCH is scheduled in a bandwidth exceeding 5 MHz, timing relaxation may be applied to the eRedCap UE. For example, when a multicast PDSCH is scheduled in a bandwidth exceeding 5 MHz, whether to apply timing relaxation and how to apply timing relaxation may be determined depending on the ACK/NACK mode.

Embodiment 9

Embodiment 9 relates to a method for processing multiple channels based on the sum of PRBs of multiple channels received simultaneously. That is, Embodiment 9 relates to a processing method in a case where the sum of PRBs of simultaneously transmitted channels exceeds a PRB corresponding to a 5 MHz bandwidth. An eRedCap UE may preferentially process important channels based on the priorities of simultaneously transmitted channels. Hereinafter, a case in which an MBS channel (e.g., a multicast channel and/or a broadcast channel) is received within a slot with another channel will be described.

As an example of the present disclosure, as illustrated in FIG. 9, two channels may be scheduled/transmitted in one slot. Here, the MBS PDSCH may include a broadcast PDSCH and/or an MBS PDSCH. And, the other PDSCH may include a PDSCH that may be scheduled by SI-RNTI, P-RNTI, RA-RNTI, C-RNTI, or MsgB-RNTI.

Embodiment 9-1

In one embodiment of the present disclosure, if the sum of the PRBs of each of the plurality of channels received in the same slot does not exceed the number of PRBs corresponding to a specific bandwidth, the eRedCap UE may receive/decode all of the plurality of channels. That is, the eRedCap UE may receive/decode all of the channels scheduled in each slot of FIG. 9.

Embodiment 9-2

In one embodiment of the present disclosure, when the sum of PRBs of two channels (e.g., MBS PDSCH and other PDSCH) scheduled in one slot exceeds the number of PRBs corresponding to a specific bandwidth (e.g., 25 when SCS is 15 kHz or 12 when SCS is 30 kHz), the operation of the eRedCap UE may be determined depending on which RNTI the other PDSCH among the two channels is scheduled with.

For example, if another PDSCH is scheduled by P-RNTI, the eRedCap UE may drop or skip the MBS PDSCH. That is, the MBS PDSCH may not be decoded.

For example, if another PDSCH (e.g., a unicast PDSCH) is scheduled by the C-RNTI, the eRedCap UE may drop or skip the unicast PDSCH. That is, the unicast PDSCH may not be decoded. In this case, HARQ feedback for the MBS PDSCH may exist, but HARQ feedback for the unicast PDSCH may not exist.

For example, if another PDSCH is scheduled by SI-RNTI, the eRedCap UE may drop or skip the MBS PDSCH. In this case, HARQ feedback for the MBS PDSCH may exist.

For example, if another PDSCH is scheduled by MCCH-RNTI, the PDSCH scheduled by MCCH-RNTI may be processed with priority, and the PDSCH scheduled by G-RNTI may be dropped.

For example, if both PDSCHs are scheduled by G-RNTI, the PDSCH to be dropped may be determined based on the priority of each PDCCH that scheduled each of the two PDSCHs. That is, the PDSCH scheduled by the PDCCH with the lower priority may be dropped.

For example, if different MBS PDSCHs are scheduled in the same slot, the MBS PDSCH located later in terms of OFDM symbol position may be dropped.

Embodiment 9-3

In one embodiment of the present disclosure, if the sum of PRBs of two channels scheduled in slot n exceeds the number of PRBs corresponding to a 5 MHz bandwidth, and if there is another PDSCH to be decoded in slot n+1, the eRedCap UE may perform decoding for both channels.

The operation described in Embodiment 9 may be applied when multiple channels are scheduled for the same slot and the multiple channels overlap each other. That is, when multiple channels scheduled for the same slot overlap each other, Embodiment 9 may be applied depending on whether the sum of the PRBs of the multiple channels exceeds the number of PRBs corresponding to a 5 MHz bandwidth. However, this is only one embodiment, and Example 9 can be applied even when multiple channels scheduled for the same slot do not overlap each other.

Embodiment 10

Embodiment 10 relates to a method for processing simultaneously received channels depending on whether the number of PRBs of an MBS channel exceeds a specific number of PRBs.

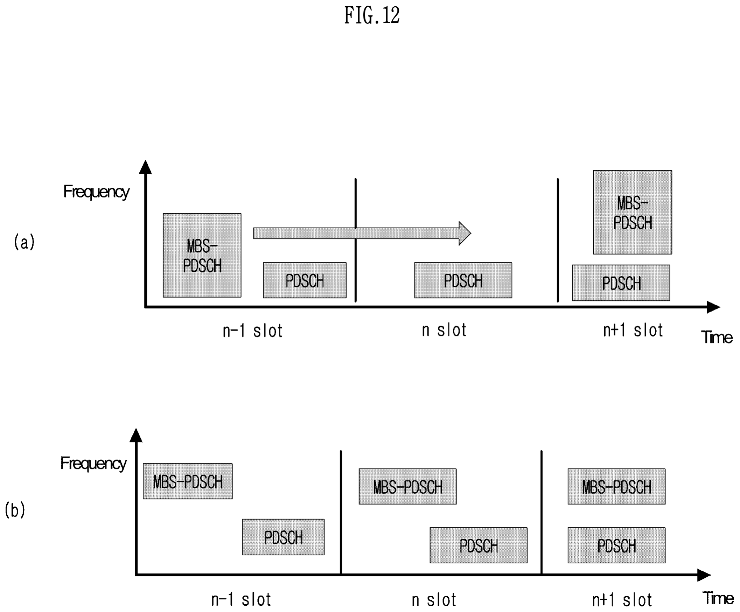

The MBS PDSCH can be scheduled to exceed a bandwidth of 5 MHz (i.e., the number of PRBs of the MBS PDSCH exceeds the number of PRBs corresponding to a bandwidth of 5 MHz). In this case, as illustrated in (a) of FIG. 12, the processing time of the MBS PDSCH can exceed one slot based on the eRedCap UE.

Hereinafter, the operation of the eRedCap UE is described when an additional PDSCH is received while the number of PRBs of an MBS PDSCH scheduled on a specific slot exceeds the number of PRBs corresponding to a specific bandwidth (e.g., 5 MHz). In this case, the operation of the eRedCap UE may vary depending on the type of PDSCH. The operation below can be applied regardless of whether the two channels (i.e., the MBS PDSCH and the additional PDSCH) overlap in the time domain.

Embodiment 10-1

In one embodiment of the present disclosure, the eRedCap UE may drop or skip one of the two channels. For example, the eRedCap UE may drop the MBS PDSCH among the two channels.

For example, if the additional PDSCH (i.e., unicast PDSCH) is scheduled by C-RNTI, the eRedCap UE may drop the unicast PDSCH. That is, the unicast PDSCH may not be decoded. In this case, HARQ feedback for the MBS PDSCH may exist, but HARQ feedback for the unicast PDSCH may not exist. In addition, in slot n+1, the MBS PDSCH and the unicast PDSCH may overlap in OFDM symbol units.

For example, if the additional PDSCH is scheduled by P-RNTI, the MBS PDSCH may be dropped. For example, the MBS PDSCH in slot n-1 as shown in (a) of FIG. 12 may be dropped.

For example, if the additional PDSCH is scheduled by SI-RNTI, the MBS PDSCH may be dropped. In this case, HARQ feedback for the MBS PDSCH may exist.

Embodiment 10-2

Unlike (a) of FIG. 12, (b) of FIG. 12 illustrates a case where the number of PRBs of the MBS PDSCH does not exceed the number of PRBs corresponding to a 5 MHz bandwidth. As illustrated in (b) of FIG. 12, when two channels overlap (i.e., overlap in one OFDM symbol unit) in slot n and slot n+1, the eRedCap UE may drop/skip one of the two channels or the corresponding channel may not be decoded.

For example, if one of the two channels (i.e., a unicast PDSCH) is scheduled by the C-RNTI, the eRedCap UE may drop the unicast PDSCH. For example, the channel to be dropped may be determined based on the priority of each DCI scheduling each of the two channels. For example, the channel scheduled by the DCI with the lower priority may be dropped.

For example, if there is HARQ feedback for the MBS PDSCH, the eRedCap UE may drop the unicast PDSCH among the MBS PDSCH and the unicast PDSCH. Here, HARQ feedback for the unicast PDSCH may not exist. As another example, the eRedCap UE may drop the MBS PDSCH among the two channels (e.g., the MBS PDSCH and the unicast PDSCH).

Embodiment 10-3

In one embodiment of the present disclosure, except for slot n-1 of FIG. 9, if two channels overlap or do not overlap in the time domain, and the sum of PRBs of the two channels does not exceed the number of PRBs corresponding to a 5 MHz bandwidth, the eRedCap UE may decode both channels. If the sum of PRBs of the two channels exceeds the number of PRBs corresponding to a 5 MHz bandwidth, the eRedCap UE may drop/skip one of the two channels, or the channel may not be decoded.

For example, if a unicast PDSCH among two channels (e.g., MBS PDSCH and unicast PDSCH) is scheduled by C-RNTI, the eRedCap UE may drop the unicast PDSCH. For example, the channel to be dropped may be determined based on the priority of each DCI scheduling each of the two channels. For example, a channel scheduled by a DCI with a lower priority may be dropped.

For example, if there is HARQ feedback for the MBS PDSCH, the eRedCap UE may drop the unicast PDSCH among the MBS PDSCH and the unicast PDSCH. Here, HARQ feedback for the unicast PDSCH may not exist. As another example, the eRedCap UE may drop the MBS PDSCH among the two channels (e.g., the MBS PDSCH and the unicast PDSCH).

Embodiment 11

Embodiment 11 relates to a method of utilizing Embodiments 9 and 10 depending on the presence or absence of HARQ feedback.

HARQ feedback may or may not be present for an MBS channel. If HARQ feedback is present, the MBS channel may be considered as a unicast PDSCH. If HARQ feedback is not present, the MBS channel may be considered as a general SIB transmission PDSCH channel. Embodiment 11 relates to a processing method of an eRedCap UE for an MBS channel with HARQ feedback and an MBS channel without HARQ feedback, respectively.

If there is HARQ feedback for the MBS channel, embodiment 10 may be applied. And, if there is no HARQ feedback for the MBS channel, embodiment 9 may be applied. If there is HARQ feedback, one or more channels may be scheduled within a 5 MHz bandwidth. If there is no HARQ feedback, one or more channels may be scheduled within a 5 MHz bandwidth or exceeding a 5 MHz bandwidth.

Embodiment 11-1

Embodiment 11-1 relates to the operation of an eRedCap UE in the presence of HARQ feedback, and is described with reference to (b) of FIG. 12. As illustrated in (b) of FIG. 12, if multiple channels scheduled for the same slot overlap in the time domain (i.e., overlap within a single OFDM symbol), the eRedCap UE may drop/skip one of the two channels, or the channel may not be decoded, regardless of whether the sum of the PRBs of each channel exceeds the PRB number corresponding to a specific bandwidth (e.g., 5 MHz).

For example, if one of the two channels (i.e., the unicast PDSCH) is scheduled by the C-RNTI, the eRedCap UE may drop the unicast PDSCH. For example, if there is HARQ feedback for the MBS PDSCH, the eRedCap UE may drop the unicast PDSCH among the MBS PDSCH and the unicast PDSCH. In this case, there may be no HARQ feedback for the unicast PDSCH. As another example, the eRedCap UE may drop the MBS PDSCH among the two channels (e.g., the MBS PDSCH and the unicast PDSCH).

For example, if both channels (e.g., PDSCHs) are scheduled by G-RNTI, the PDSCH to be dropped may be determined based on the priority of each PDCCH that scheduled each of the two PDSCHs. That is, the PDSCH scheduled by the PDCCH with the lower priority may be dropped.

For example, if different MBS PDSCHs are scheduled in the same slot, the MBS PDSCH located later in terms of OFDM symbol position may be dropped.

Embodiment 11-1 may be applied when the sum of the number of PRBs of two channels exceeds the number of PRBs corresponding to a 5 MHz bandwidth. That is, when the sum of the number of PRBs of two channels does not exceed the number of PRBs corresponding to a 5 MHz bandwidth, both channels can be decoded.

Embodiment 11-2

Embodiment 11-2 relates to the operation of an eRedCap UE in the absence of HARQ feedback, and is described with reference to FIG. 9. Regardless of whether the number of PRBs of an MBS channel scheduled in a specific slot exceeds the number of PRBs corresponding to a 5 MHz bandwidth, if the sum of the numbers of PRBs of two channels exceeds the number of PRBs corresponding to a specific bandwidth (e.g., 5 MHz), the eRedCap UE may drop one of the two channels.

In one embodiment of the present disclosure, when the sum of PRBs of two channels (e.g., MBS PDSCH and other PDSCH) scheduled in one slot exceeds the number of PRBs corresponding to a specific bandwidth (e.g., 25 when SCS is 15 kHz or 12 when SCS is 30 kHz), the operation of the eRedCap UE may be determined depending on which RNTI the other PDSCH among the two channels is scheduled with.

For example, if another PDSCH is scheduled by P-RNTI, the eRedCap UE may drop or skip the MBS PDSCH. That is, the MBS PDSCH may not be decoded.

For example, if another PDSCH (e.g., a unicast PDSCH) is scheduled by the C-RNTI, the eRedCap UE may drop or skip the unicast PDSCH. That is, the unicast PDSCH may not be decoded. In this case, HARQ feedback for the MBS PDSCH may exist, but HARQ feedback for the unicast PDSCH may not exist.

For example, if another PDSCH is scheduled by SI-RNTI, the eRedCap UE may drop or skip the MBS PDSCH. In this case, HARQ feedback for the MBS PDSCH may exist.

For example, if another PDSCH is scheduled by MCCH-RNTI, the PDSCH scheduled by MCCH-RNTI may be processed with priority, and the PDSCH scheduled by G-RNTI may be dropped.

For example, if both PDSCHs are scheduled by G-RNTI, the PDSCH to be dropped may be determined based on the priority of each PDCCH that scheduled each of the two PDSCHs. That is, the PDSCH scheduled by the PDCCH with the lower priority may be dropped.

For example, if different MBS PDSCHs are scheduled in the same slot, the MBS PDSCH located later in terms of OFDM symbol position may be dropped.

Embodiment 11-3

As an example of the present disclosure, when there is HARQ feedback, the operation related to FIG. 9 may be applied. As another example, when there is no HARQ feedback, if the number of PRBs of the MBS PDSCH exceeds the number of PRBs corresponding to a 5MHz bandwidth, the operation related to FIG. 12 (a) may be applied. As another example, when there is no HARQ feedback, if the number of PRBs of the MBS PDSCH is less than or equal to the number of PRBs corresponding to a 5MHz bandwidth, the operation related to FIG. 12 (b) may be applied.

If a channel other than the MBS PDSCH channel is received in the same slot, the operations described below may be performed. For example, the eRedCap UE may not consider the scheduling described below or may perform operations according to the UE implementation.

For example, if another PDSCH is scheduled by P-RNTI, the eRedCap UE may drop or skip the MBS PDSCH. That is, the MBS PDSCH may not be decoded.

For example, if another PDSCH (e.g., a unicast PDSCH) is scheduled by the C-RNTI, the eRedCap UE may drop or skip the unicast PDSCH. That is, the unicast PDSCH may not be decoded. In this case, HARQ feedback for the MBS PDSCH may exist, but HARQ feedback for the unicast PDSCH may not exist.

For example, if another PDSCH is scheduled by SI-RNTI, the eRedCap UE may drop or skip the MBS PDSCH. In this case, HARQ feedback for the MBS PDSCH may exist.

For example, if another PDSCH is scheduled by MCCH-RNTI, the PDSCH scheduled by MCCH-RNTI may be processed with priority, and the PDSCH scheduled by G-RNTI may be dropped.

For example, if both PDSCHs are scheduled by G-RNTI, the PDSCH to be dropped may be determined based on the priority of each PDCCH that scheduled each of the two PDSCHs. That is, the PDSCH scheduled by the PDCCH with the lower priority may be dropped.

For example, if different MBS PDSCHs are scheduled in the same slot, the MBS PDSCH located later in terms of OFDM symbol position may be dropped.

Embodiment 12

Embodiment 12 relates to a method of utilizing Embodiments 9 and 10 according to the MBS casting type.

The MBS casting type may include a broadcast type and a multicast type. If the MBS casting type is a broadcast type, Embodiment 9 may be applied. If the MBS casting type is a multicast type, Embodiment 10 may be applied.

Embodiment 12-1

As an example of the present disclosure, if an eRedCap UE may receive two or more channels in the same slot, the eRedCap UE may receive both channels. For example, if the total number of PRBs of two or more channels is less than or equal to the number of PRBs corresponding to a 5 MHz bandwidth, the eRedCap UE may receive two or more channels in the same slot.

As an example of the present disclosure, when an MBS PDSCH and another channel (e.g., another PDSCH) are scheduled simultaneously in the same slot, and an eRedCap UE cannot receive both channels simultaneously, the method described below may be applied. In this case, the eRedCap UE may not expect scheduling of the two channels and may perform operations according to the UE implementation.

For example, if another PDSCH is scheduled by P-RNTI, the eRedCap UE may drop or skip the MBS PDSCH. That is, the MBS PDSCH may not be decoded.

For example, if another PDSCH (e.g., a unicast PDSCH) is scheduled by the C-RNTI, the eRedCap UE may drop or skip the unicast PDSCH. That is, the unicast PDSCH may not be decoded. In this case, HARQ feedback for the MBS PDSCH may exist, but HARQ feedback for the unicast PDSCH may not exist.

For example, if another PDSCH is scheduled by SI-RNTI, the eRedCap UE may drop or skip the MBS PDSCH. In this case, HARQ feedback for the MBS PDSCH may exist.

For example, if another PDSCH is scheduled by MCCH-RNTI, the PDSCH scheduled by MCCH-RNTI may be processed with priority, and the PDSCH scheduled by G-RNTI may be dropped.

For example, if both PDSCHs are scheduled by G-RNTI, the PDSCH to be dropped may be determined based on the priority of each PDCCH that scheduled each of the two PDSCHs. That is, the PDSCH scheduled by the PDCCH with the lower priority may be dropped.

For example, if different MBS PDSCHs are scheduled in the same slot, the MBS PDSCH located later in terms of OFDM symbol position may be dropped.

Meanwhile, for a broadcast channel, embodiment 10 may be applied, and for a multicast channel, embodiment 9 may be applied. In addition, when decoding one channel because the eRedCap UE cannot decode both channels, embodiment 12-1 may be applied.

## Embodiment 13

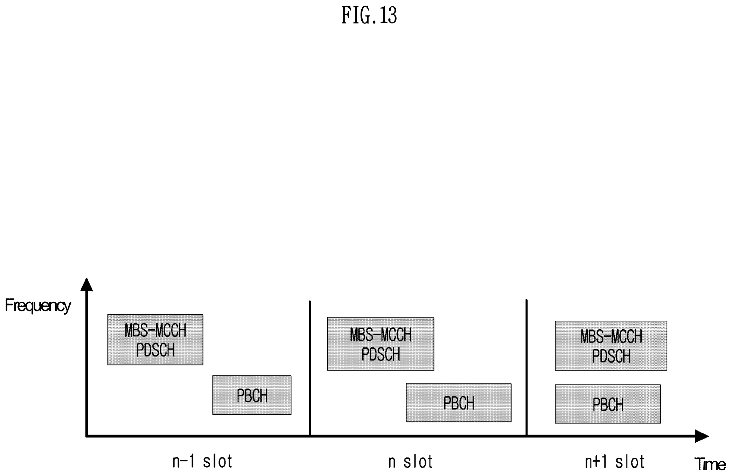

As illustrated in FIG. 13, assume that the PBCH and MBS channels are received simultaneously or separately in a single slot. In this case, if at least one of the PBCH and MBS channels is scheduled by the G-RNTI, decoding of the corresponding channels may not be expected. As another example, if the PBCH and MBS channels are received simultaneously or separately, and at least one of the channels is scheduled by the MCCH-RNTI, the corresponding channels may be decoded simultaneously.

The number of PRBs that an eRedCap UE may process in a single slot is 25 (e.g., SCS is 15/30 kHz) or 12 (e.g., SCS is 30/60 kHz), and the number of PRBs of a PBCH can be 20. Hereinafter, the decoding method of other channels of an eRedCap UE is described.

## Embodiment 13-1

In one embodiment of the present disclosure, when a PBCH and an MBS PDSCH (e.g., a PDSCH scheduled by MCCH-RNTI) are received simultaneously in one slot, an eRedCap UE may drop/skip one of the PBCH and the MBS PDSCH, or one of the PBCH and the MBS PDSCH may not be expected to be decoded.

Here, the case of slot n-1 of Fig. 13 (e.g., the case where MBS-MCCH-PDSCH and PBCH are scheduled without overlapping in the same slot) may be excluded or included. If the sum of the number of PRBs of each of the PBCH and MBS PDSCH is less than or equal to the number of PRBs corresponding to a 5 MHz bandwidth, the eRedCap UE may decode both the PBCH and the MBS PDSCH.

## Embodiment 13-2

In one embodiment of the present disclosure, an eRedCap UE may not expect PBCH and MBS PDSCH (e.g., PDSCH scheduled by MCCH-RNTI) to be scheduled simultaneously in one slot.

Here, the case of slot n-1 of FIG. 13 (e.g., the case where MBS-MCCH-PDSCH and PBCH are scheduled without overlapping in the same slot) may be excluded or included. Embodiment 13-2 may be applied when the SCS is 30 kHz. In addition, Embodiment 13-2 may be applied when the total number of PRBs of each of the PBCH and MBS PDSCH exceeds the number of PRBs corresponding to a 5 MHz bandwidth.

Embodiments 13-1 and 13-2 may be applied when the eRedCap UE is in the RRC_Inactive or RRC idle state. The operations described in Embodiments 9 to 12 can be applied according to the bandwidth scheduling range of the MBS channel, regardless of the presence or absence of HARQ feedback or the MBS casting type.

## Embodiment 13-3

In one embodiment of the present disclosure, when the number of PRBs of an MBS channel scheduled for a specific slot exceeds the number of PRBs corresponding to a 5 MHz bandwidth, the operation related to (a) of FIG. 12 may be applied. That is, the operation according to Embodiment 10 and Embodiment 10-1 may be applied to a PDSCH scheduled for the next slot based on a specific slot.

## Embodiment 13-4

In one embodiment of the present disclosure, if the number of PRBs of an MBS channel does not exceed the number of PRBs corresponding to a 5 MHz bandwidth and the MBS channel overlaps with another channel in the time domain, the methods described below may be applied. The methods described below may also be applied to slot n-1 of (b) of FIG. 12, where two channels do not overlap each other within the same slot.

- If the sum of the number of PRBs of the MBS channel and each of the other channels does not exceed the number of PRBs corresponding to a 5 MHz bandwidth, the eRedCap UE may decode both the MBS channel and the other channels.

- If the sum of the number of PRBs of the MBS channel and each of the other channels exceeds the number of PRBs corresponding to a 5 MHz bandwidth, the eRedCap UE may not expect simultaneous scheduling of the two channels or may drop one channel.

For example, if the other channel is a unicast channel, the eRedCap UE may drop the unicast channel among the two channels. Except for the case of NTN, since HARQ feedback exists for unicast channels, the eRedCap UE may drop the unicast channel among the two channels. As another example, the eRedCap UE may drop the MBS channel among the two channels.

As another example, if the other channel is a unicast channel, a channel with HARQ feedback among the MBS channel and the unicast channel may be dropped. In the case of a channel with HARQ feedback, retransmission of the channel may be expected. For example, if there is no HARQ feedback for the unicast channel and HARQ feedback for the MBS channel, the MBS channel may be dropped.

For example, if there is or is not HARQ feedback on both the MBS channel and the unicast channel, whether to drop the MBS channel and the unicast channel may be determined based on the priority of the DCI that scheduled each of the MBS channel and the unicast channel. As another example, if there is or is not HARQ feedback on both the MBS channel and the unicast channel, one of the MBS channel and the unicast channel may be dropped. The type of channel to be dropped among the MBS channel and the unicast channel may be predefined or configured by higher layer signaling.

For example, if an eRedCap UE may simultaneously receive a unicast channel and an MBS channel in a single slot, the UE may transmit UE capability information (e.g., "fdm-BroadcastUnicast-r17") to the base station indicating that it supports simultaneous slots of a unicast channel and an MBS channel.

Embodiment 13-5

In one embodiment of the present disclosure, it is assumed that MBS channels and unicast PDSCHs are scheduled in the same slot. In this case, the MBS channel and unicast PDSCH may overlap in whole or in part in one symbol within one slot.

The following describes the operation of an eRedCap UE when it cannot simultaneously receive an MBS channel and a unicast PDSCH. For example, the channel to be dropped among the MBS channel and the unicast channel may be determined based on priority rules and the presence or absence of HARQ feedback. Here, the priority can be indicated through a priority indicator field included in the DCI. Alternatively, the priority may be configured or predefined by RRC signaling.

For example, if the other channel is a unicast channel, the eRedCap UE may drop the unicast channel among the two channels. Except for the case of NTN, since HARQ feedback exists for the unicast channel, the eRedCap UE may drop the unicast channel among the two channels.

For example, if two channels cannot be received simultaneously, the eRedCap UE may not expect simultaneous reception scheduling of the two channels.

As another example, a channel with HARQ feedback among MBS channels and unicast channels may be dropped. For a channel with HARQ feedback, retransmission of the channel may be expected. For example, if there is no HARQ feedback for a unicast channel and HARQ feedback for an MBS channel, the MBS channel may be dropped.

For example, if there is or is no HARQ feedback on both the MBS channel and the unicast channel, whether or not to drop the MBS channel and the unicast channel may be determined based on the priority of the DCI that scheduled each of the MBS channel and the unicast channel. For example, the priority of the guest channel may be indicated through the priority indicator of the DCI, and a channel with a lower priority may be dropped regardless of the presence or absence of HARQ feedback.

As another example, if there is no or no HARQ feedback on both the MBS channel and the unicast channel, one of the MBS channel and the unicast channel may be dropped. The type of channel to be dropped among the MBS channel and the unicast channel may be predefined or configured by higher layer signaling.

As another example, one of the MBS PDSCH and the unicast PDSCH may be dropped based on the priorities configured/indicated for the MBS PDSCH and the unicast PDSCH, respectively. If the priorities of the MBS PDSCH and the unicast PDSCH are the same, the type of channel to be dropped may be determined depending on the presence or absence of HARQ feedback. If the priorities and the presence or absence of HARQ feedback of the MBS PDSCH and the unicast PDSCH are the same, the unicast PDSCH may be dropped. As another example, if the priorities and the presence or absence of HARQ feedback of the MBS PDSCH and the unicast PDSCH are the same, the type of channel to be dropped among the two channels may be predefined or configured by higher layer signaling. As described above, rather than first checking the priorities of the two channels and then checking the presence or absence of HARQ feedback, the presence or absence of HARQ feedback may be checked and then the priority may be checked.

As another example, a bit field may be added to the DCI scheduling the MBS PDSCH. If the MBS PDSCH and the unicast PDSCH overlap in the time domain and the eRedCap UE cannot decode both the MBS PDSCH and the unicast PDSCH, the bit field on the DCI may indicate which channel among the MBS PDSCH and the unicast PDSCH to drop/decode.

Embodiment 13-6

In one embodiment of the present disclosure, it is assumed that an MBS channel and a unicast channel (e.g., a unicast PDSCH) are scheduled within a specific slot, and the number of PRBs of the MBS channel is less than or equal to the number of PRBs corresponding to a bandwidth of 5 MHz. In this case, if the total number of PRBs allocated to each of the MBS channel and the unicast PDSCH (e.g., a PDSCH including paging or SIB) exceeds the number of PRBs corresponding to a bandwidth of 5 MHz, decoding of a PDSCH that may be scheduled in a slot following the specific slot may not be expected or may not be skipped. For example, an eRedCap UE may not expect scheduling of another PDSCH in a slot following the specific slot, and if another PDSCH in the next slot is received, the MBS PDSCH in the specific slot may be dropped.

In one embodiment of the present disclosure, when an MBS PDSCH with a PRB allocated less than or equal to a number of PRBs corresponding to a unicast channel and a bandwidth of 5 MHz is received in one slot (in which case, the unicast channel and the MBS PDSCH may or may not overlap each other), it may not be guaranteed which PDSCH the (e) RedCap UE will process until the next slot, and processing of two channels by the (e)RedCap UE in the slot may be guaranteed. If no PDSCH is scheduled in the next slot, the (e)RedCap UE may decode both channels in the slot. In this case, the sum of the numbers of PRBs of each of the unicast channel and the MBS PDSCH may exceed the number of PRBs corresponding to a bandwidth of 5 MHz, and the unicast channel and the MBS PDSCH may partially or completely overlap within the slot. Additionally, if a specific PDSCH is received in the next slot, the MBS PDSCH in that slot may be dropped. As another example, regardless of the reception of a specific PDSCH in the next slot, MBS PDSCH decoding in that slot may not be expected or may be skipped.

Embodiment 13-7

In one embodiment of the present disclosure, when the number of PRBs of a PDSCH associated with an MCCH-RNTI (e.g., a PDSCH scheduled by an MCCH-RNTI) exceeds the number of PRBs corresponding to a 5 MHz bandwidth, decoding of a PBCH transmitted simultaneously in the same slot as the PDSCH may not be expected, or scheduling of the PBCH may not be expected. In addition, the PDSCH and the PBCH have an FDM relationship and may overlap completely or partially in an OFDM symbol.

If the PDSCH scheduled by the PBCH and the MCCH-RNTI within a single slot partially or fully overlap, the UE may expect that both channels (e.g., the PDSCH scheduled by the PBCH and/or the MCCH-RNTI) are scheduled within a 5 MHz bandwidth. Furthermore, the UE may expect to receive the PDSCH scheduled by the MCCH-RNTI within a 5 MHz bandwidth regardless of whether the PBCH is received within a single slot.

Embodiment 13-8

In one embodiment of the present disclosure, it is assumed that a unicast channel (or a PDSCH scheduled by a PDCCH CRC-scrambled by a PDSCH including paging information or an SIB or an RA-RNTI) and an MBS PDSCH allocated with a number of PRBs greater than or equal to a bandwidth of 5 MHz overlap on an OFDM symbol. However, even when a unicast channel and an MBS PDSCH do not overlap within the same slot, the operation described below may be applied.

Here, the unicast channel may be dropped (or skipped) or not decoded, regardless of the priority of the DCI or the presence or absence of HARQ feedback. If a channel other than a unicast channel is scheduled within a slot, such as the MBS PDSCH, the MBS PDSCH may be dropped (or skipped) or not decoded.

For example, if a non-unicast channel and an MBS PDSCH with PRBs allocated greater than or equal to the number of PRBs corresponding to a 5 MHz bandwidth (or regardless of the number of PRBs) are scheduled/received simultaneously within a slot, the MBS PDSCH may not be decoded as it is dropped. In this case, the non-unicast PDSCH may include unicast including paging or SIB. As another example, embodiment 13-8 may also be applied when the UE is in the RRC_Idle state or RRC_Inactive state.

Embodiment 13-9

In one embodiment of the present disclosure, a unicast PDSCH and an MBS (e.g., multicast or broadcast) PDSCH may or may not overlap on an OFDM symbol within one slot, and the base station may expect to schedule each channel such that the sum of the number of PRBs of each of the unicast PDSCH and the MBS PDSCH is within the number of PRBs corresponding to a 5 MHz bandwidth.

Embodiment 13-10

In one embodiment of the present disclosure, regardless of whether the number of PRBs of the MBS PDSCH (e.g., broadcast PDSCH) exceeds 25, when the MBS PDSCH and the unicast PDSCH are simultaneously transmitted/scheduled within one slot, the UE may decode both the MBS PDSCH and the unicast PDSCH. In this case, the MBS PDSCH and the unicast PDSCH may partially or completely overlap on the OFDM symbol.

Embodiment 13-11

In one embodiment of the present disclosure, in a situation where multiple channels are simultaneously transmitted/scheduled on a specific slot and one of the multiple channels must be dropped, a UE may receive both an MBS PDSCH and another PDSCH of a slot in which repeated transmission is configured. The UE may determine which of the two channels to drop by comparing the MBS PDSCH and another PDSCH simultaneously transmitted in the last slot in which repeated transmission is configured. If repeated transmission is not configured, simultaneous reception of two channels or consideration of PDSCH reception/scheduling in the next slot may be limited.

Embodiment 13-12

In one embodiment of the present disclosure, when an MBS PDSCH is received in the same slot as another PDSCH (e.g., a PDSCH scheduled by SI-RNTI, a paging PDSCH, or a PDSCH associated with RA-RNTI (or msgB-RNTI), etc.), the UE may drop the MBS PDSCH regardless of the number of PRBs of the MBS PDSCH. In this case, the MBS PDSCH and the other PDSCH may overlap in whole or in part in an OFDM symbol.

Embodiment 13-13

In one embodiment of the present disclosure, it is assumed that an MBS PDSCH and another channel are transmitted/scheduled in slot n. If the sum of the number of PRBs of the MBS PDSCH and each of the other channels exceeds the number of PRBs corresponding to a 5 MHz bandwidth, and if there is no other PDSCH in slot n+1, regardless of the number of PRBs of the MBS PDSCH, the UE can decode both the MBS PDSCH and the other channel. In this case, the MBS PDSCH and each of the other channels may overlap in an OFDM symbol, but is not limited thereto.
For example, the other PDSCH may be, but is not limited to, a unicast PDSCH. If the other PDSCH is a unicast PDSCH, the UE may not decode both the MBS PDSCH and the unicast PDSCH within slot n.

Embodiment 13-14

In one embodiment of the present disclosure, it is assumed that an MBS PDSCH and another channel are transmitted/scheduled in slot n. If the sum of the number of PRBs of the MBS PDSCH and each of the other channels is greater than or equal to the number of PRBs corresponding to a 5 MHz bandwidth, the UE may drop the MBS PDSCH. In this case, the MBS PDSCH and each of the other channels may overlap in an OFDM symbol, but is not limited thereto. For example, Embodiments 13-14 may be applied when another PDSCH is scheduled in slot n+1.
For example, the other PDSCH may include a PDSCH scheduled by SI-RNTI that requires decoding, a paging PDSCH, etc.
In the present disclosure, if it is not expected that both channels scheduled in one slot will be decoded, the PDSCH on which inter-channel contention is performed may include a PDSCH scheduled by SI-RNTI and a PDSCH associated with P-RNTI. In addition, another PDSCH scheduled in the next slot may include a PDSCH that generally requires decoding from the UE perspective.

Embodiment 14

Embodiment 14 relates to a case where multiple MBS channels and unicast PDSCHs are received in one slot. In this case, a PDSCH scheduled in the next slot may be considered.
That is, Embodiment 14 relates to a processing method of an eRedCap UE when one or more MBS channels and one or more unicast PDSCHs are scheduled in one slot. However, this is only one embodiment, and the operation described in Embodiment 14 can also be applied when one MBS channel and one unicast PDSCH are scheduled in one slot.

Here, if the sum of the number of PRBs of each of one or more MBS channels and one or more unicast PDSCHs is less than or equal to the number of PRBs corresponding to a 5 MHz bandwidth, the eRedCap UE may decode both one or more MBS channels and one or more unicast PDSCHs.

As an example of the present disclosure, it is assumed that one or more MBS channels (e.g., MBS PDSCH) and one or more unicast PDSCHs are scheduled in slot n, and other PDSCH(s) are scheduled in slot n+1.

If the sum of the PRBs for each MBS PDSCH and unicast PDSCH exceeds the number of PRBs corresponding to a 5MHz bandwidth (e.g., 25 for 15kHz SCS or 12 for 30kHz SCS), and no other PDSCHs are scheduled for the next slot (e.g., slot n+1), eRedCap UEs may decode both one or more MBS PDSCHs and one or more unicast PDSCHs. Even if the number of PRBs for each channel exceeds the number of PRBs corresponding to a 5MHz bandwidth, eRedCap UEs may support an additional timeline processing time relaxation of approximately one slot.

Here, it is assumed that another PDSCH is scheduled in the next slot (e.g., slot n+1). Since the eRedCap UE may process PRBs corresponding to a 5MHz bandwidth in one slot, if it cannot drop another PDSCH in the next slot, the eRedCap UE may drop some of one or more MBS PDSCHs and one or more unicast PDSCHs. The eRedCap UE may process PRBs within the number of PRBs corresponding to a 5MHz bandwidth in slot n.

Hereinafter, a method for determining a dropped channel among one or more MBS PDSCHs and one or more unicast PDSCHs in slot n is described. In Embodiment 14, it can be assumed that the eRedCap UE expects the sum of the number of PRBs of multiple unicast PDSCHs received within one slot to be less than or equal to the PRB corresponding to a 5 MHz bandwidth.

Embodiment 14-1

In one embodiment of the present disclosure, when one or more MBS PDSCHs and one or more unicast PDSCHs are scheduled in slot n, all one or more MBS PDSCHs may be dropped by the UE. In this case, the sum of the number of PRBs of each of one or more MBS PDSCHs and one or more unicast PDSCHs scheduled in slot n may exceed, but is not limited to, the number of PRBs corresponding to a 5 MHz bandwidth.

Also, even if the total number of PRBs scheduled in slot n becomes less than or equal to the PRBs corresponding to the 5 MHz bandwidth due to the removal of some of one or more MBS PDSCHs, one or more MBS PDSCHs may be dropped by the UE. In this case, one or more unicast PDSCHs may also be dropped entirely or decoding may not be expected.

Embodiment 14-2

In one embodiment of the present disclosure, when one or more MBS PDSCHs and one or more unicast PDSCHs are scheduled in slot n, the MBS PDSCHs whose starting symbol is the latest on the OFDM symbol may be sequentially dropped. In this case, the sum of the number of PRBs of each of the one or more MBS PDSCHs and one or more unicast PDSCHs scheduled in slot n may exceed the number of PRBs corresponding to a 5 MHz bandwidth, but is not limited thereto.

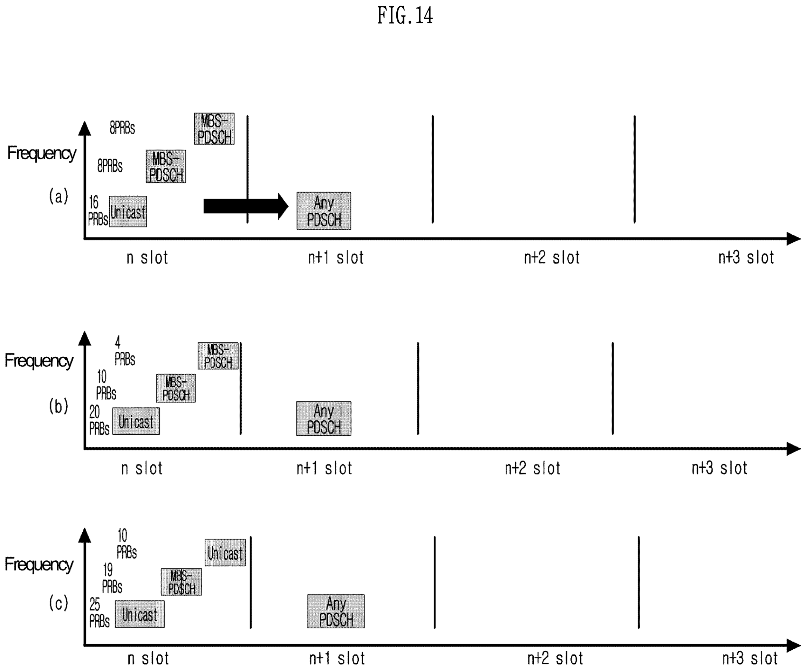

For example, the eRedCap UE may decode each channel (e.g., non-dropped multicast PDSCH and unicast PDSCH, etc.) within the number of PRBs corresponding to a 5 MHz bandwidth within slot n. For example, the eRedCap UE may decode one or more MBS PDSCHs, starting with a PDSCH having an earlier start symbol, and can drop the corresponding MBS PDSCH when the number of decoded PRBs exceeds the number of PRBs corresponding to a 5 MHz bandwidth. That is, as illustrated in (a) of FIG. 14, the middle MBS PDSCH in slot n can be processed, and the latest MBS PDSCH can be dropped.

Additionally or alternatively, it is assumed that MBS PDSCHs are sequentially scheduled in TDM. The eRedCap UE may schedule one or more MBS PDSCHs in OFDM symbol order, and if the number of decoded PRBs exceeds a certain value, the corresponding MBS PDSCH can be dropped. In addition, the eRedCap UE may decode one or more unicast PDSCHs scheduled after the dropped MBS PDSCH. Here, the eRedCap UE may decode one or more unicast PDSCHs within a range in which the number of PRBs decoded so far in slot n does not exceed the number of PRBs corresponding to a 5 MHz bandwidth.

That is, the eRedCap UE may process one or more MBS PDSCHs in the order of the start of OFDM symbols. In addition, when the eRedCap UE processes PRBs of a specific MBS PDSCH, if the total number of decoded PRBs exceeds the number of PRBs corresponding to a 5MHz bandwidth, the corresponding MBS PDSCH is dropped and one or more channels (e.g., unicast PDSCHs) may be decoded in the order of OFDM symbols within a range that does not exceed the number of PRBs in a 5MHz BW.

As described above, one or more MBS PDSCHs may be decoded first, followed by a unicast PDSCH, but is not limited thereto. One or more unicast PDSCHs may be decoded first, followed by a multicast PDSCH. As another example, MBS PDSCHs and unicast PDSCHs may be decoded within a 5 MHz bandwidth in the order of starting symbols, without distinction.

Embodiment 14-3

In one embodiment of the present disclosure, when one or more MBS PDSCHs and one or more unicast PDSCHs are scheduled in slot n, one or more MBS PDSCHs may be dropped according to the priority of each of the MBS PDSCHs. In addition, decoding of one or more PDSCHs may be performed within a 5 MHz bandwidth range.

Here, the priority of each MBS PDSCH can be indicated by the DCI scheduling each MBS PDSCH and may also be configured by higher layer signaling. As another example, the priority of each MBS PDSCH may be predefined. For example, the priority of the broadcast PDSCH may be defined as the highest priority or the lowest priority. As another example, the priority of the broadcast PDSCH may be configured by higher layer signaling.

In one embodiment of the present disclosure, it is assumed that three or more PDSCHs are scheduled within one slot, and the sum of PRBs of the three or more PDSCHs exceeds the number of PRBs corresponding to a 5 MHz bandwidth.

For example, if the sum of the PRB numbers of the two PDSCHs with the highest priorities among three or more PDSCHs is less than or equal to the number of PRBs corresponding to a bandwidth of 5 MHz, reception/decoding for the two PDSCHs may be performed and reception of the remaining PDSCHs may be omitted. As another example, if the sum of the PRB numbers of the two PDSCHs with the highest priorities among three or more PDSCHs exceeds the number of PRBs corresponding to a bandwidth of 5 MHz, only the PDSCH with the higher priority among the two PDSCHs may be received/decoded and reception of the remaining PDSCHs may be omitted. As another example, only the PDSCH with the highest priority among three or more PDSCHs may be received/decoded and reception of the remaining PDSCHs may be omitted.

Embodiment 14-4

In one embodiment of the present disclosure, the priority of each of the plurality of PDSCHs scheduled for slot n may be determined based on the RNTI associated with each of the plurality of PDSCHs. That is, among the plurality of PDSCHs scheduled for slot n, PDSCHs with lower priorities may be dropped first. Accordingly, the eRedCap UE may decode PDSCH(s) within a 5 MHz bandwidth range.

Embodiment 14-5

In one embodiment of the present disclosure, an MBS PDSCH with HARQ feedback may be retransmitted, and the MBS PDSCH with HARQ feedback may be dropped from among the multiple PDSCHs scheduled in slot n. Accordingly, the eRedCap UE may decode PDSCH(s) within a 5 MHz bandwidth range.

For example, if the sum of the number of PRBs of MBS PDSCHs without HARQ feedback exceeds the number of PRBs corresponding to a 5 MHz bandwidth, the eRedCap UE may decode MBS PDSCH(s) without HARQ feedback in the starting OFDM symbol order within the 5 MHz bandwidth. As another example, the eRedCap UE may first drop MBS PDSCHs with HARQ feedback.

Embodiment 14-6

In one embodiment of the present disclosure, among multiple MBS PDSCHs scheduled within a specific slot, a PDSCH that is repeatedly configured may be dropped preferentially. In addition, the eRedCap UE may decode one or more PDSCH(s) that are not dropped within a 5 MHz bandwidth range.

Embodiment 14-7

In one embodiment of the present disclosure, when multiple MBS PDSCHs and multiple unicast PDSCHs are scheduled on one slot, the eRedCap UE may expect that the sum of the number of PRBs of the multiple MBS PDSCHs and multiple unicast PDSCHs on one slot is less than or equal to the number of PRBs corresponding to a 5 MHz bandwidth.

For example, if the sum of the PRB numbers of the MBS PDSCH and the multiple unicast PDSCHs exceeds the PRB number corresponding to a 5 MHz bandwidth, all unicast PDSCHs scheduled in the slot may be dropped or all multicast PDSCHs may be dropped. If all multicast PDSCHs are dropped, the eRedCap UE may process unicast PDSCH(s) within the 5 MHz bandwidth. As another example, if the sum of the PRB numbers of the MBS PDSCH and the multiple unicast PDSCHs exceeds the PRB number corresponding to a 5 MHz bandwidth, all PDSCHs may be dropped.

Embodiment 14-8

In one embodiment of the present disclosure, when the sum of the number of PRBs of each of a plurality of PDSCHs scheduled in slot n exceeds the number of PRBs corresponding to a 5 MHz bandwidth, a PDSCH to be dropped can be identified according to the PRB size of each of the plurality of PDSCHs. In addition, the eRedCap UE may process at least one PDSCH that is not dropped within the 5 MHz bandwidth.

For example, referring to (b) of FIG. 14, all of the multiple MBS PDSCHs may be dropped, or one MBS PDSCH may be dropped. For example, the sum of the number of PRBs of the multiple PDSCHs scheduled in slot n (e.g., 34) may exceed the number of PRBs corresponding to a 5 MHz bandwidth (e.g., 25 when SCS is 15 kHz). In this case, if an MBS PDSCH with a large number of PRBs among the MBS PDSCHs is dropped, the last PDSCH with 4 PRBs may not be dropped. Accordingly, the eRedCap UE may decode the unicast PDSCH and the MBS PDSCH with 4 PRBs in slot n even if there is another PDSCH in slot n+1.

In this case, if a method of dropping MBS PDSCHs scheduled later based on the starting OFDM symbol order is applied, an MBS PDSCH with a PBR of 10 may remain among the MBS PDSCHs. Accordingly, since the total number of PRBs of the unicast PDSCH and the remaining MBS PDSCHs is 30, the eRedCap UE must also drop the remaining MBS PDSCHs. Accordingly, if another PDSCH is scheduled on slot n+1, the eRedCap UE may drop the PDSCH with a large/small PRB number among the multiple MBS PDSCHs.

As another example, when the number of PRBs of multiple MBS PDSCHs is the same, a method of dropping MBS PDSCHs scheduled later based on the starting OFDM symbol order may be applied.

As another example, the eRedCap UE may decode multiple channels within a 5 MHz bandwidth range in the order scheduled in slot n. The eRedCap UE may decode PDSCHs sequentially scheduled in slot n, and can ensure that the sum of the number of decoded PRBs does not exceed the number of PRBs corresponding to the 5 MHz bandwidth.

Embodiment 14-9

In one embodiment of the present disclosure, if the sum of the number of PRBs of each of a plurality of PDSCHs scheduled in slot n does not exceed the number of PRBs corresponding to a 5 MHz bandwidth, the eRedCap UE may determine which PDSCH among the unicast PDSCH and the MBS PDSCH to decode/drop.

Embodiment 14-10

In one embodiment of the present disclosure, when the sum of the number of PRBs of one or more unicast PDSCHs and one or more multicast PDSCHs scheduled (simultaneously) in slot n exceeds the number of PRBs corresponding to a 5 MHz bandwidth, the eRedCap UE may or may not receive either the unicast PDSCH or the MBS PDSCH. The manner in which the eRedCap UE receives either the unicast PDSCH or the MBS PDSCH may be configured by higher layer signaling or may be performed by the UE implementation.

The operations according to embodiments 14-1 to 14-10 may be performed under the assumption that the MBS PDSCH or/and the unicast PDSCH are dropped based on the position of the OFDM symbol, whether repetitive transmission is configured, whether HARQ feedback is present, the priority or/and the number of PRBs, etc.

In addition, the operations according to embodiments 14-1 to 14-10 may be applied to a case where the unicast PDSCH illustrated in (a) of FIG. 14 becomes an MBS PDSCH (i.e., a case where three MBS PDSCHs are scheduled in one slot). Additionally, the same priority may be assigned to MBS PDSCH(s) and unicast PDSCH(s) scheduled in the same slot, and the priority-based or PRB number-based dropping rule described above may be applied.

For example, a drop rule based on the number of PRBs (e.g., a rule that preferentially drops channels with a large/small number of PRBs) may be applied. As another example, a unicast PDSCH and/or an MBS PDSCH may be dropped based on the OFDM symbol start position or the presence or absence of HARQ. In other words, the above-described drop rule may be applied regardless of whether the unicast PDSCH or the MBS PDSCH is distinguished.

As another example, if the sum of the PRBs of multiple unicast channels and MBS PDSCHs scheduled in a specific slot exceeds the PRBs corresponding to a 5MHz bandwidth, and a PDSCH is scheduled in the next slot of the specific slot, the MBS PDSCH of the specific slot may be dropped. Even if the MBS PDSCH of the specific slot is dropped, the sum of the PRBs of the unicast channels may still exceed the PRBs corresponding to a 5MHz bandwidth.

If the total number of PRBs of unicast channels exceeds the number of PRBs corresponding to a 5 MHz bandwidth, and if no PDSCH is scheduled on the next slot of a specific slot, the eRedCap UE may decode all channels on the specific slot.

Embodiment 14-11

In one embodiment of the present disclosure, when each channel is scheduled in slot n as illustrated in (c) of FIG. 14, a method for dropping unicast channels must be determined. That is, when multiple unicast channels are scheduled in TDM within one slot, the eRedCap UE may transmit UE capability information indicating whether decoding of multiple unicast channels is supported and/or the number of channels that can be decoded to the base station. The eRedCap UE may transmit/use the above-described UE capability information, or capability information for the eRedCap UE may be newly defined. As another example, the eRedCap UE may not support decoding/reception of multiple unicast channels or multiple MBS PDSCHs.

As an example of the present disclosure, an eRedCap UE may sequentially drop MBS PDSCHs having the latest starting symbol on an OFDM symbol (i.e., decode PDSCHs having the earliest starting symbol on an OFDM symbol). Accordingly, the eRedCap UE may decode one or more PDSCHs within a 5 MHz bandwidth range.

### Embodiment 14-12

In one embodiment of the present disclosure, when one or more MBS PDSCHs and one or more unicast PDSCHs are scheduled in slot n, one or more unicast PDSCHs may be dropped according to the priority of each of the unicast PDSCHs. In addition, decoding of one or more PDSCHs may be performed within a 5 MHz bandwidth range.

Here, the priority of each unicast PDSCH can be indicated by the DCI scheduling each unicast PDSCH and can also be configured by higher layer signaling. As another example, the priority of each unicast PDSCH can also be predefined. For example, the priority of a broadcast PDSCH may be defined as the highest priority or the lowest priority. As another example, the priority of a broadcast PDSCH may be configured by higher layer signaling.

In one embodiment of the present disclosure, it is assumed that three or more PDSCHs are scheduled within one slot, and the sum of PRBs of the three or more PDSCHs exceeds the number of PRBs corresponding to a 5 MHz bandwidth.

For example, if the sum of the PRB numbers of the two PDSCHs with the highest priorities among three or more PDSCHs is less than or equal to the number of PRBs corresponding to a bandwidth of 5 MHz, reception/decoding for the two PDSCHs may be performed and reception of the remaining PDSCHs may be omitted. As another example, if the sum of the PRB numbers of the two PDSCHs with the highest priorities among three or more PDSCHs exceeds the number of PRBs corresponding to a bandwidth of 5 MHz, only the PDSCH with the higher priority among the two PDSCHs may be received/decoded and reception of the remaining PDSCHs may be omitted. As another example, only the PDSCH with the highest priority among three or more PDSCHs may be received/decoded and reception of the remaining PDSCHs may be omitted.

### Embodiment 14-13

In one embodiment of the present disclosure, a unicast PDSCH with HARQ feedback may be retransmitted, and may be dropped starting from the unicast PDSCH with HARQ feedback among the multiple PDSCHs scheduled in slot n. Accordingly, the eRedCap UE may decode PDSCH(s) within a 5 MHz bandwidth range.

For example, if the sum of the number of PRBs of unicast PDSCHs without HARQ feedback exceeds the number of PRBs corresponding to a 5 MHz bandwidth, the eRedCap UE may decode unicast PDSCH(s) without HARQ feedback in the starting OFDM symbol order within the 5 MHz bandwidth. As another example, the eRedCap UE may first drop unicast PDSCHs with HARQ feedback.

### Embodiment 14-14

In one embodiment of the present disclosure, among multiple unicast PDSCHs scheduled within a specific slot, a PDSCH that is repeatedly configured may be dropped preferentially. In addition, the eRedCap UE may decode one or more PDSCH(s) that are not dropped within a 5 MHz bandwidth range.

### Embodiment 14-15

In one embodiment of the present disclosure, when multiple unicast PDSCHs are scheduled in one slot, the UE may or may not expect that the plurality of unicast PDSCHs are scheduled so that the sum of the PRB numbers does not exceed 25. In addition, when the sum of the PRB numbers of the plurality of unicast PDSCHs exceeds 25, the UE may not decode the plurality of unicast PDSCHs.

### Embodiment 14-16

In one embodiment of the present disclosure, if the sum of the number of PRBs of each of a plurality of PDSCHs scheduled in slot n exceeds the number of PRBs corresponding to a 5 MHz bandwidth, a PDSCH to be dropped may be identified according to the PRB size of each of the plurality of PDSCHs. For example, an eRedCap UE may perform decoding/drop for a unicast PDSCH or a PDSCH with a large PRB size. In addition, the eRedCap UE may process at least one PDSCH that is not dropped within a 5 MHz bandwidth.

Embodiment 14-17

In one embodiment of the present disclosure, if the sum of the number of PRBs of each of a plurality of unicast PDSCHs scheduled in slot n does not exceed the number of PRBs corresponding to a 5 MHz bandwidth, the eRedCap UE may determine a PDSCH to decode/drop among the plurality of unicast PDSCHs.

Embodiment 14-18

In one embodiment of the present disclosure, when multiple unicast PDSCHs are scheduled in slot n, the eRedCap UE may not decode the multiple unicast PDSCHs. In this case, the sum of the number of PRBs of each of the multiple unicast PDSCHs may exceed the number of PRBs corresponding to a 5 MHz bandwidth, but is not limited thereto.

The above-described embodiment relates to a method for determining a channel to be dropped among MBS PDSCH(s) and unicast PDSCH(s) when MBS PDSCH(s) and unicast PDSCH(s) are scheduled in a specific slot.

The method for determining which channel to drop among MBS PDSCH(s) and unicast PDSCH(s) may be based on the presence or absence of HARQ feedback, priority, presence or absence of repetitive transmission configurations, channel type, etc. of each channel. The eRedCap UE may consider the presence or absence of HARQ feedback, priority, presence or absence of repetitive transmission configurations, and channel type in that order for each channel to determine which channel to drop.

However, this is only one embodiment, and the eRedCap UE may determine the presence or absence of HARQ feedback, priority, presence or absence of repetitive transmission configurations, and the order of channel types for each channel as factors for determining which channels to drop. As another example, the presence or absence of HARQ feedback, priority, presence or absence of repetitive transmission configurations, and the order of channel types for each channel as factors for determining which channels to drop may be predefined or configured by higher layer signaling.

For example, if unicast channel(s) and MBS channel(s) are scheduled in one slot, and the sum of the number of PRBs of each unicast channel and MBS channel exceeds the number corresponding to a 5 MHz bandwidth, the eRedCap UE may decode/drop each channel within a range not exceeding the number of PRBs corresponding to a 5 MHz bandwidth in one slot. In this case, the eRedCap UE may drop the MBS channel with priority, but can also drop the unicast channel with priority. As another example, the eRedCap UE may drop the channel with the latest/earliest OFDM symbol, or drop at least one channel depending on the presence or absence of HARQ feedback or the number of PRBs.

For example, an eRedCap UE may determine whether to drop/decode a unicast PDSCH or MBS PDSCH scheduled for one slot within a 5 MHz bandwidth in the order of priority, number of PRBs, and starting OFDM symbol position. As another example, an eRedCap UE may determine whether to drop/decode a unicast PDSCH or MBS PDSCH scheduled for one slot within a 5 MHz bandwidth in the order of presence or absence of HARQ feedback, number of PRBs, or starting OFDM symbol position.

That is, the decoding/drop order/method of MBS/unicast channels can be determined based on the cases described below. Each case represents a priority factor to consider when determining which channel to drop/decode. However, this is only one example, and additional cases may exist.

Case 1: PDSCH type (MBS channel or unicast channel) > Start OFDM symbol

Case 2: PDSCH type (MBS channel or unicast channel) > Number of PRBs (large or small) > Start OFDM symbol

Case 3: HARQ (with or without) > Start OFDM symbol > PDSCH type (MBS or unicast)

Case 4: HARQ (with or without) > PDSCH type (MBS or unicast) > Start OFDM symbol

The above-described cases can perform drop/decode operations depending on whether the sum of the number of PRBs of each MBS PDSCH or unicast PDSCH exceeds the number of PRBs corresponding to a 5 MHz bandwidth. For example, when decoding sequentially scheduled channels, the eRedCap UE may determine whether the sum of the number of PRBs of the decoded channel exceeds the number of PRBs corresponding to a 5 MHz bandwidth.

For example, in case 1, the eRedCap UE may process unicast PDSCHs with priority. At this time, if the number of decoded PRBs does not exceed the number of PRBs corresponding to a 5 MHz bandwidth, the eRedCap UE may decode MBS PDSCHs. If the number of decoded PRBs exceeds the number of PRBs corresponding to a 5 MHz bandwidth, an MBS PDSCH to be additionally decoded within the 5 MHz bandwidth range can be determined. Here, the MBS PDSCH to be decoded/dropped can be determined according to the start OFDM symbol of the MBS PDSCH.

For example, if the number of PRBs of MBS PDSCH in slot n exceeds the number of PRBs corresponding to a 5 MHz bandwidth, or the sum of the number of PRBs of MBS PDSCH(s) or unicast PDSCH(s) scheduled in slot n exceeds the number of PRBs corresponding to a 5 MHz bandwidth, the base station may notify the UE that a PDCCH scheduling a specific channel on slot n or/and slot n+1 exists in slot n+1.

Embodiment 15

Embodiment 15 relates to a case where multiple MBS channels and unicast PDSCHs are received in one slot (e.g., slot n). In this case, a PDSCH scheduled in the next slot (e.g., slot n+1) may not be considered.

That is, in embodiment 15, if a PRB exceeding the number of PRBs corresponding to a 5 MHz bandwidth is scheduled on a slot, regardless of whether another PDSCH is scheduled on the next slot, the channels of the slot may be dropped. In (a) and (b) of FIG. 14, even if there is no other PDSCH on slot n+1, reception of a specific PDSCH may not be processed. In this case, the above-described methods may be used when determining which PDSCH among the unicast PDSCH and the multicast PDSCH is to be dropped in slot n.

Embodiment 14 is a method in which the above-described methods are applied when another PDSCH is scheduled in the next slot (e.g., slot n+1), and Embodiment 15 is a method in which each channel is dropped when PRBs corresponding to a 5 MHz bandwidth are scheduled in slot n regardless of whether another PDSCH is scheduled in the next slot (e.g., slot n+1).

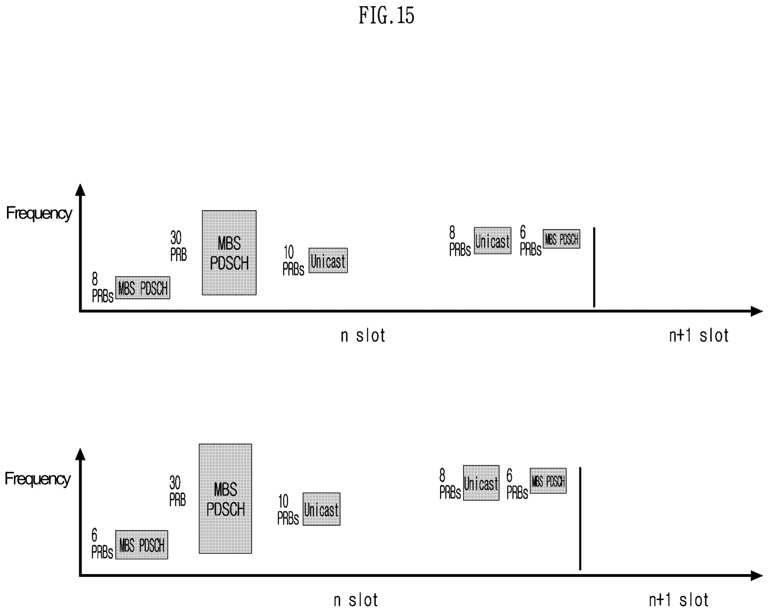

For example, in a situation such as (a) of FIG. 15 (e.g., when the sum of the number of PRBs of each channel scheduled in slot n exceeds the number of PRBs corresponding to a 5 MHz bandwidth), if the method according to embodiment 14-2 is applied, since there is no other channel in slot n+1, the eRedCap UE may decode all unicast PDSCHs and MBS PDSCHs.

However, when the method according to Embodiment 15 is applied, the number of PRBs corresponding to a 5 MHz bandwidth can be processed in slot n regardless of whether another PDSCH is scheduled in slot n+1. If the number of PRBs corresponding to the MBS PDSCH scheduled in slot n+1 exceeds the number of PRBs corresponding to a 5 MHz bandwidth, the corresponding channels can be dropped.

For example, when the operation according to embodiment 15 is applied to (a) of FIG. 15, the second MBS PDSCH with a PRB count of 30 may be dropped, and the first MBS PDSCH, the third unicast PDSCH, and the next MBS PDSCH may be dropped. The above example is an example when the priority between the unicast PDSCH and the MBS PDSCH is not specified. If a separate priority is configured/indicated/defined for each of the MBS PDSCH or the unicast PDSCH, the type of channel to be decoded/dropped may vary, and this may also be applied to embodiment 14.

As an example of the present disclosure, when a priority is configured/indicated/defined for a unicast channel, the PRB of the MBS PDSCH may be added after the sum of the number of PRBs of the unicast PDSCHs is calculated as in (b) of FIG. 15. When the PRB of the MBS PDSCH is added to the sum of the number of PRBs of the unicast PDSCHs in OFDM order, the MBS PDSCH that is the earliest in terms of OFDM symbols (i.e., the MBS PDSCH with 6 PRBs) may be decoded. And, when it is determined to decode the MBS PDSCH behind the unicast channel, the MBS PDSCH behind the unicast channel (i.e., the PDSCH with 6 PRBs) may be decoded.

As an example of the present disclosure, the processing order of unicast PDSCHs may be determined according to the order of OFDM. If additional processing of MBS PDSCHs is possible, the PDSCH to be processed may be determined according to the starting OFDM symbol, or it may be determined whether an MBS PDSCH following a unicast channel is to be processed with priority.

When priorities are configured/defined between channels, high-priority (unicast) channels can be decoded according to OFDM symbol order. If the sum of the number of PRBs of the high-priority channels does not exceed the number of PRBs corresponding to a 5 MHz bandwidth, the decoding/drop order of MBS PDSCHs can also be sequentially determined according to OFDM symbol order. However, this is only one embodiment, and MBS PDSCHs may be processed preferentially.

The operation according to embodiment 14 can be applied only when another PDSCH is scheduled in slot n+1 in (a) of Fig. 15. In a situation where the total number of PRBs of unicast PDSCHs does not exceed the number of PRBs corresponding to a 5 MHz bandwidth, if additional processing of MBS channels is required, the eRedCap UE may sequentially process each MBS channel according to the OFDM symbol order. That is, the eRedCap UE may decode each channel within a 5 MHz bandwidth.

For example, if there is an MBS PDSCH exceeding the number of PRBs corresponding to a 5 MHz bandwidth, the MBS PDSCH and all PDSCHs scheduled after the MBS PDSCH may be dropped.

For example, in the case of (a) of FIG. 15, the processing of the subsequent MBS PDSCH may not be completed due to the MBS PDSCH having 8 PRBs. In addition, in the case of (b) of FIG. 15, the corresponding PDSCH may be processed due to the MBS PDSCH having 6 PRBs.

The embodiments described above can be applied regardless of whether the MBS PDSCH and the unicast PDSCH are TDMed with each other or whether the MBS PDSCH and the unicast PDSCH overlap in an OFDM symbol.

An eRedCap UE may transmit UE capability information, including the number of MBS PDSCHs and unicast PDSCHs that can be processed in a single slot or consecutive slots, to a base station. In this case, the UE capability information may be defined separately for the eRedCap UE in addition to the capability information described above.

In addition, NACK may be transmitted from the UE to the base station for MBS PDSCH and unicast PDSCH that could not be decoded due to being dropped.

The above-described embodiments can be applied regardless of whether the MBS PDSCH and the unicast PDSCH overlap within a single slot and regardless of whether the sum of the number of PRBs of the channels exceeds the number of PRBs corresponding to a 5 MHz bandwidth. That is, the above-described embodiments can be applied even if only one or more MBS PDSCHs/unicast PDSCHs are scheduled in the same slot.

For example, in Embodiment 14, even if the total number of PRBs of MBS PDSCHs scheduled in slot n exceeds the number of PRBs corresponding to a 5 MHz bandwidth, decoding of MBS PDSCHs may be possible if there is no other PDSCH in the next slot (e.g., slot n+1).

As another example, in embodiment 15, regardless of whether a PDSCH is scheduled in the next slot, even if the sum of the number of PRBs of the PDSCHs scheduled in slot n exceeds the number of PRBs corresponding to a 5 MHz bandwidth, it can be determined whether a channel among the MBS PDSCH channels is to be dropped according to the embodiments described above.

For example, if a channel drop is required, the eRedCap UE may decide which PDSCH to process among the remaining MBS PDSCHs and unicast PDSCHs within the 5 MHz bandwidth, excluding the MBS PDSCHs exceeding the 5 MHz bandwidth.

General Device to which the Present Disclosure may be applied

FIG. 10 illustrates a block diagram of a wireless communication device according to an embodiment of the present disclosure.

In reference to FIG. 10, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure.

For example, the processor 102 may process the information in the memory 104 to generate first information/-signal and then transmit a wireless signal including the first information/signal through the transceiver 106. Additionally, the processor 102 may receive a wireless signal including the second information/signal through the transceiver 106 and then store information obtained from signal processing of the second information/signal in the memory 104.

A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method performed by a user equipment (UE) in a wireless communication system, the method comprising:

   receiving a first downlink channel and a second downlink channel from a base station in a first slot; and
   based on a number of physical resource blocks (PRBs) allocated for each of the first downlink channel and the second downlink channel being less than or equal to a first threshold value, decoding the first downlink channel and the second downlink channel,
   wherein the first downlink channel and the second downlink channel partially or fully overlap in a time domain.

2. The method of claim 1, wherein:
   capability information indicating that reception of the first downlink channel and the second downlink channel that are frequency division multiplexed (FDMed) in a single slot is supported is transmitted from the UE to the base station.

3. The method of claim 1, wherein:

   the first downlink channel is a unicast physical downlink shared channel (PDSCH), and
   the second downlink channel is a multicast PDSCH or broadcast PDSCH.

4. The method of claim 1, wherein:
the PRBs allocated to each of the first downlink and the second downlink do not overlap each other.

5. The method of claim 1, wherein:

   based on a subcarrier spacing (SCS) being configured to 15 kHz, the first threshold is 25, and
   based on the SCS being configured to 30 kHz, the first threshold is 12.

6. The method of claim 1, wherein:
based on the number of PRBs allocated to each of the first downlink channel and the second downlink channel exceeding the threshold, decoding for one of the first downlink channel and the second downlink channel is skipped.

7. The method of claim 1, wherein:

   the first downlink channel is scheduled by first downlink control information (DCI) cyclic redundancy check (CRC) scrambled by a cell-radio network temporary identifier (C-RNTI) or a configured scheduling (CS)-RNTI, and the second downlink channel is scheduled by second DCI CRC scrambled by a group(G)-RNTI or a multicast broadcast service control channel (MCCH)-RNTI.

8. The method of claim 1, wherein:
the UE is an enhanced reduced capability (eRedCap) UE.

9. A method performed by a user equipment (UE) in a wireless communication system, the method comprising:

   receiving a first downlink channel from a base station in slot n (where n is an integer greater than or equal to 0); and
   based on a number of physical resource blocks (PRBs) allocated to the first downlink channel being less than or equal to a second threshold, processing reception of the first downlink channel,
   wherein based on the number of PRBs allocated to the first downlink channel exceeding the second threshold, and the first downlink channel reception being a repetitive reception or the second downlink channel being received in slot n+1, the reception of the first downlink channel is not processed by the UE.

10. A user equipment (UE) in a wireless communication system, the UE comprising:

    at least one transceiver; and
    at least one processor coupled to the at least one transceiver;
    wherein the at least one processor is configured to:

    receive, through the at least one transceiver, a first downlink channel and a second downlink channel from a base station in a first slot; and
    based on a number of physical resource blocks (PRBs) allocated for each of the first downlink channel and the second downlink channel being less than or equal to a first threshold value, decode the first downlink channel and the second downlink channel,
    wherein the first downlink channel and the second downlink channel partially or fully overlap in a time domain.

11. A method performed by a base station in a wireless communication system, the method comprising:

    transmitting information for scheduling a first downlink channel and a second downlink channel to a user equipment (UE) in a first slot; and
    transmitting the first downlink channel and the second downlink channel to the UE in the first slot,
    wherein based on a number of physical resource blocks (PRBs) allocated to each of the first downlink channel and the second downlink channel being less than or equal to a first threshold, the first downlink channel and the second downlink channel are decoded by the UE, and
    wherein the first downlink channel and the second downlink channel partially or fully overlap in a time domain.

12. A base station in a wireless communication system, the base station comprising:

    at least one transceiver; and
    at least one processor coupled to the at least one transceiver;

wherein the at least one processor is configured to:

transmit, through the at least one transceiver, information for scheduling a first downlink channel and a second downlink channel to a user equipment (UE) in a first slot; and
transmit, through the at least one transceiver, the first downlink channel and the second downlink channel to the UE in the first slot,
wherein based on a number of physical resource blocks (PRBs) allocated to each of the first downlink channel and the second downlink channel being less than or equal to a first threshold, the first downlink channel and the second downlink channel are decoded by the UE, and
wherein the first downlink channel and the second downlink channel partially or fully overlap in a time domain.

13. A processing device configured to control a user equipment (UE) in a wireless communication system, the processing device comprising:

at least one processor; and
at least one computer memory operatively coupled to the at least one processor and storing instructions for performing operations upon being executed by the at least one processor,
wherein the operations comprise:

receiving a first downlink channel and a second downlink channel from a base station in a first slot; and
based on a number of physical resource blocks (PRBs) allocated for each of the first downlink channel and the second downlink channel being less than or equal to a first threshold value, decoding the first downlink channel and the second downlink channel,
wherein the first downlink channel and the second downlink channel partially or fully overlap in a time domain.

14. At least one non-transitory computer readable medium storing at least one instruction, wherein:
the at least one instruction executed by at least one processor controls a device in a wireless communication system to perform:

receiving a first downlink channel and a second downlink channel from a base station in a first slot; and
based on a number of physical resource blocks (PRBs) allocated for each of the first downlink channel and the second downlink channel being less than or equal to a first threshold value, decoding the first downlink channel and the second downlink channel,
wherein the first downlink channel and the second downlink channel partially or fully overlap in a time domain.

FIG.1

FIG.2

# FIG.3

One Subframe

$14 \cdot 2^{\mu}$ OFDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
- In a resource grid, $(k,\bar{l})$
- In a resource block, $(k,l)$

$k = 0$

$l = 0$        $l = 14 \cdot 2^{\mu} - 1$

FIG.4

FIG.5

FIG.6

INITIAL CELL
SEARCH

SYSTEM
INFORMATION
RECEPTION

RANDOM ACCESS PROCEDURE

GENERAL DL/UL Tx/Rx

| PSS/SSS& [DLRS]& PBCH | PDCCH/ PDSCH (BCCH) | PRACH | PDCCH/ PDSCH | PUSCH | PDCCH/ PDSCH | PDCCH/ PDSCH | PUSCH/ PUCCH |

S601    S602    S603    S604    S605    S606    S607    S608

· DL/UL ACK/NACK
· UE CQI/PMI RI REPORT
  USING PUSCH AND PUCCH

FIG.7

RECEIVING THE FIRST DOWNLINK CHANNEL AND THE SECOND DOWNLINK CHANNEL FROM THE BASE STATION IN THE FIRST SLOT — S710

BASED ON THE NUMBER OF PRBS ALLOCATED FOR EACH OF THE FIRST DOWNLINK CHANNEL AND THE SECOND DOWNLINK CHANNEL BEING LESS THAN OR EQUAL TO A FIRST THRESHOLD VALUE, DECODING THE FIRST DOWNLINK CHANNEL AND THE SECOND DOWNLINK CHANNEL — S720

FIG.8

RECEIVING THE FIRST DOWNLINK CHANNEL FROM THE BASE STATION IN SLOT N (N IS AN INTEGER GREATER THAN OR EQUAL — S810

BASED ON THE NUMBER OF PRBS ALLOCATED FOR THE FIRST DOWNLINK CHANNEL BEING LESS THAN OR EQUAL TO THE SECOND THRESHOLD, PROCESSING RECEPTION OF THE FIRST DOWNLINK CHANNEL — S820

FIG.9

Frequency

| Other channel | | Other channel | | Other channel |

MBS-PDSCH | MBS-PDSCH | MBS-PDSCH

Time

n-1 slot          n slot          n+1 slot

FIG.10

FIG.11

EP 4 712 659 A1

FIG.12

EP 4 712 659 A1

FIG.13

EP 4 712 659 A1

FIG.14

FIG.15

EP 4 712 659 A1

EP 4 712 659 A1

FIG.16

62

# EP 4 712 659 A1

## INTERNATIONAL SEARCH REPORT

| | International application No. |
|---|---|
| | **PCT/KR2024/005875** |

### A. CLASSIFICATION OF SUBJECT MATTER

**H04W 72/30**(2023.01)i; **H04W 72/0446**(2023.01)i; **H04W 72/0453**(2023.01)i; **H04W 72/1273**(2023.01)i; **H04W 72/566**(2023.01)i; **H04W 72/23**(2023.01)i; **H04W 4/06**(2009.01)i; **H04L 1/1812**(2023.01)i; **H04L 5/00**(2006.01)i

According to International Patent Classification (IPC) or to both national classification and IPC

### B. FIELDS SEARCHED

Minimum documentation searched (classification system followed by classification symbols)

H04W 72/30(2023.01); H04L 1/18(2006.01); H04W 72/04(2009.01); H04W 72/10(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PDSCH, PRB, threshold, decoding, overlap, FDMed, unicast, multicast, broadcast, SCS, skip, C-RNTI, CS-RNTI, G-RNTI, MCCH-RNTI, eRedCap, repetition

### C. DOCUMENTS CONSIDERED TO BE RELEVANT

| Category* | Citation of document, with indication, where appropriate, of the relevant passages | Relevant to claim No. |
|---|---|---|
| X<br>Y | VIVO. Discussion on further UE complexity reduction. R1-2300464, 3GPP TSG RAN WG1 #112. Athens, Greece. 17 February 2023.<br>See sections 1-2.2. | 1,3-6,8,10-14<br>2,7 |
| Y | NOKIA et al. Remaining Issues for RRC_CONNECTED UEs supporting MBS. R1-2300924, 3GPP TSG RAN WG1 #112. Athens, Greece. 17 February 2023.<br>See sections 2.3-2.4. | 2,7 |
| Y | US 2022-0322313 A1 (SAMSUNG ELECTRONICS CO., LTD.) 06 October 2022 (2022-10-06)<br>See paragraphs [0171]-[0333]. | 9 |
| Y | LG ELECTRONICS. Discussion on further UE complexity reduction for eRedCap. R1-2303425, 3GPP TSG RAN WG1 Meeting #112bis-e, E-Meeting. 07 April 2023.<br>See sections 1 and 2.3. | 9 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **08 August 2024** | **08 August 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**EP 4 712 659 A1**

## INTERNATIONAL SEARCH REPORT

<table>
<tr><td colspan="3"></td><td>International application No.<br><br>**PCT/KR2024/005875**</td></tr>
</table>

**C.    DOCUMENTS CONSIDERED TO BE RELEVANT**

| Category* | Citation of document, with indication, where appropriate, of the relevant passages | Relevant to claim No. |
|---|---|---|
| A | WO 2022-148184 A1 (DATANG MOBILE COMMUNICATIONS EQUIPMENT CO., LTD.) 14 July 2022 (2022-07-14)<br>See claims 1-25. | 1-14 |

Form PCT/ISA/210 (second sheet) (July 2022)

| | International application No. |
|---|---|
| | **PCT/KR2024/005875** |

| Patent document cited in search report | | | Publication date (day/month/year) | Patent family member(s) | | | Publication date (day/month/year) |
|---|---|---|---|---|---|---|---|
| US | 2022-0322313 | A1 | 06 October 2022 | CN | 115150941 | A | 04 October 2022 |
| | | | | EP | 4298848 | A1 | 03 January 2024 |
| | | | | KR | 10-2023-0164024 | A | 01 December 2023 |
| | | | | US | 2024-0023123 | A1 | 18 January 2024 |
| | | | | WO | 2022-211480 | A1 | 06 October 2022 |
| WO | 2022-148184 | A1 | 14 July 2022 | CN | 114760705 | A | 15 July 2022 |
| | | | | EP | 4277405 | A1 | 15 November 2023 |

Form PCT/ISA/210 (patent family annex) (July 2022)